# EUROPEAN PATENT SPECIFICATION

(11) **EP 4 160 950 B1**
(45) Date of publication and mention of the grant of the patent: **21.05.2025**
(21) Application number: 21831666.9
(22) Date of filing: 24.06.2021
(51) Int. Cl.: H04L 45/50, H04L 45/74, H04L 45/745

(54) **METHOD AND APPARATUS FOR SENDING A MESSAGE, AND NETWORK DEVICE, SYSTEM AND STORAGE MEDIUM**
VERFAHREN UND VORRICHTUNG ZUM SENDEN EINER NACHRICHT SOWIE NETZWERKVORRICHTUNG, SYSTEM UND SPEICHERMEDIUM
PROCÉDÉ ET APPAREIL D'ENVOI DE MESSAGE, AINSI QUE DISPOSITIF DE RÉSEAU, SYSTÈME ET SUPPORT DE STOCKAGE

(30) Priority: 28.06.2020 CN 202010598722; 14.10.2020 CN 202011098780
(43) Date of publication of application: 05.04.2023
(73) Proprietor: Huawei Technologies Co., Ltd., Longgang District, Shenzhen, Guangdong 518129 (CN)
(72) Inventor: WEN, Huizhi, Shenzhen, Guangdong 518129 (CN); XIAO, Yaqun, Shenzhen, Guangdong 518129 (CN); ZHAO, Keqiang, Shenzhen, Guangdong 518129 (CN)
(74) Representative: Pfenning, Meinig & Partner mbB
(86) International application number: PCT/CN2021/102184
(87) International publication number: WO 2022/001835

(56) References cited:
- EP-A1- 3 641 246
- CN-A- 110 266 592
- CN-A- 110 832 813
- US-A1- 2020 028 758
- US-A1- 2020 127 913
- S. AGRAWAL Z. ALI C. FILSFILS CISCO SYSTEMS D. VOYER BELL CANADA G. DAWRA LINKEDIN Z. LI HUAWEI TECHNOLOGIES: "SRv6 and MPLS interworking; draft-agrawal-spring-srv6-mpls-interworking-02.txt", SRV6 AND MPLS INTERWORKING; DRAFT-AGRAWAL-SPRING-SRV6-MPLS-INTERWORKING-02.TXT; INTERNET-DRAFT: SPRING, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 02, 13 February 2020 (2020-02-13), Internet Society (ISOC) 4, rue des Falaises CH- 1205 Geneva, Switzerland , pages 1 - 9, XP015137725

## Description

### TECHNICAL FIELD

Embodiments of the present invention relate to the field of communication, and in particular, to a packet sending method and apparatus, a network device, a system, and a storage medium.

### BACKGROUND

A user of a border gateway protocol (border gateway protocol, BGP)/multiprotocol label switching (multiprotocol label switching, MPLS) internet protocol (international protocol, IP) virtual private network (virtual private network, VPN) service provider may also be a service provider. In this case, the service provider is referred to as a provider carrier (provider carrier) or a tier-1 carrier (first carrier), and the user of the service provider is referred to as a customer carrier (customer carrier) or a tier-2 carrier (second carrier). Such a networking model is referred to as a carriers' carrier (carriers' carrier, CSC), to be specific, a low level service provider (service provider, SP) is a VPN customer of a higher level SP.

In a scenario in which a network of the tier-1 carrier is upgraded to segment routing over internet protocol version 6 (internet protocol version 6, IPv6) (segment routing over IPv6, SRv6) and uses an SRv6 tunnel to bear VPN traffic but a network of the tier-2 carrier is not upgraded and still runs MPLS, the tier-1 carrier that has upgraded to SRv6 cannot provide a CSC service for the tier-2 carrier running MPLS.

CN 110266592 describes a method for an SRV6 network and an IP MPLS network that comprises the steps: receiving a first message sent by first operator network edge equipment in a first network, the first network being the SRV6 network or the IP MPLS network; determining a target message format conversion table matched with the first message in a preset message format conversion library; and according to the target message format conversion table, converting the first message into a corresponding second message, and sending the second message to a second operator network edge device of a second network, the second network being an SRV6 network or an IP MPLS network, and the second network being different from the first network.

### SUMMARY

This application provides a packet sending method and apparatus, a network device, a system, and a storage medium, to resolve a problem that a tier-1 carrier that has upgraded to SRv6 cannot provide a CSC service for a tier-2 carrier running MPLS.

According to a first aspect, a packet sending method according to independent claim 1 is provided. The method includes: A first edge network device receives a first packet including a target segment identifier; then, the first edge network device generates, based on the first packet, a second packet including a first label, where there is a mapping relationship between the first label and the target segment identifier; and the first edge network device sends the second packet. The first edge network device is an egress provider edge, PE device in a first network in a carrier's carrier, CSC system, the CSC system further comprises a second network, the first network is an Internet Protocol version 6 segment routing, SRv6 network, the second network accesses the first network in a multiprotocol label switching, MPLS manner, the first network is a network of a tier-1 carrier, and the second network is a network of a tier-2 carrier.

In a solution provided in this application, an egress edge network device of a tier-1 carrier that has upgraded to an SRv6 network generates a second packet including a first label after receiving a first packet including a target segment identifier, so that the second packet can be forwarded in a network of a tier-2 carrier running MPLS, thereby resolving a problem that a tier-1 carrier that has upgraded to SRv6 cannot provide a CSC service for a tier-2 carrier running MPLS.

In a possible implementation, the target segment identifier is a first segment identifier, and the first segment identifier is used to indicate to decapsulate a header and encapsulate a label. That the first edge network device generates, based on the first packet, a second packet including a first label includes: The first edge network device decapsulates an SRv6 header in the first packet based on the first segment identifier, and encapsulates the first label into the decapsulated packet based on a mapping relationship between the first segment identifier and the first label, to obtain the second packet including the first label.

The first segment identifier is used to indicate to decapsulate a header and encapsulate a label. Therefore, based on the first segment identifier, the first edge network device can be triggered to convert the first packet into the second packet, so that the second packet can be transmitted in the network of the tier-2 carrier running MPLS. The SRv6 header that is in the first packet and that is decapsulated by the first edge network device based on the first segment identifier includes not only an IPv6 header but also an extension header.

In a possible implementation, before the first edge network device generates, based on the first packet, the second packet including the first label, the method further includes: The first edge network device receives a first route and the first label corresponding to the first route; the first edge network device advertises, based on the first route, a second route carrying the first segment identifier; and the first edge network device establishes the mapping relationship between the first label and the first segment identifier. The mapping relationship between the first segment identifier and the first label is established during route advertisement, facilitating fast implementation of conversion of the first packet into the second packet performed in subsequent packet transmission.

In a possible implementation, the target segment identifier is a second segment identifier, the first packet further includes a first flag, the second segment identifier is used to indicate to decapsulate a header, and the first flag is used to indicate to encapsulate a label. That the first edge network device generates, based on the first packet, a second packet including a first label includes: The first edge network device decapsulates an IPv6 header in the first packet based on the second segment identifier, and encapsulates the first label into the decapsulated packet based on an indication of the first flag and a mapping relationship between the second segment identifier and the first label, to obtain the second packet including the first label.

The second segment identifier is used to indicate to decapsulate a header, and the first flag is used to indicate to encapsulate a label. Therefore, based on the second segment identifier and the first flag, the first edge network device can be triggered to convert the first packet into the second packet, so that the second packet is transmitted in the network of the tier-2 carrier running MPLS. The SRv6 header that is in the first packet and that is decapsulated by the first edge network device based on the second segment identifier includes not only an IPv6 header but also an extension header.

In a possible implementation, before the first edge network device generates, based on the first packet, the second packet including the first label, the method further includes: The first edge network device receives a first route and the first label corresponding to the first route; the first edge network device advertises, based on the first route, a third route carrying the second segment identifier; and the first edge network device establishes the mapping relationship between the first label and the second segment identifier. The mapping relationship between the second segment identifier and the first label is established during route advertisement, facilitating fast implementation of conversion of the first packet into the second packet performed in subsequent packet transmission.

In a possible implementation, the first label is an MPLS label.

According to claim 1, a first edge network device receives a first packet including a target segment identifier includes: The egress PE device in the first network receives the first packet that includes the target segment identifier and that is sent by an ingress PE device in the first network. That the first edge network device sends the second packet includes: The egress PE device in the first network sends the second packet to a customer edge CE device in the second network. The first packet is a data packet, and the second packet is a data packet.

In a possible implementation, that the first edge network device receives a first route and the first label corresponding to the first route includes: The egress PE device in the first network receives the first route and the first label corresponding to the first route that are sent by the customer edge CE device in the second network.

In a possible implementation, that the first edge network device advertises, based on the first route, a second route carrying the first segment identifier includes: The egress PE device in the first network sends the second route carrying the first segment identifier to the ingress PE device in the first network.

In a possible implementation, that the first edge network device advertises, based on the first route, a third route carrying the second segment identifier includes: The egress PE device in the first network sends the third route carrying the second segment identifier to the ingress PE device in the first network.

In a possible implementation, the first network and the second network are located in different autonomous systems.

According to a second aspect, a packet sending method according to independent claim 7 is provided. The method includes: A second edge network device receives a third packet including a second label, where there is a mapping relationship between the second label and a target segment identifier; the second edge network device generates, based on the third packet, a first packet including the target segment identifier; and then, the second edge network device sends the first packet. The second edge network device is an ingress provider edge, PE device in a first network in a carrier's carrier, CSC system, the CSC system further comprises a third network, the first network is an Internet Protocol version 6 segment routing, SRv6 network, the third network accesses the first network in a multiprotocol label switching, MPLS manner, the first network is a network of a tier-1 carrier, and the third network is a network of a tier-2 carrier.

In a solution provided in this application, an ingress edge network device of a tier-1 carrier that has upgraded to an SRv6 network generates a first packet including a target segment identifier after receiving a third packet including a second label, so that the first packet can be forwarded in a network of the tier-1 carrier that has upgraded to an SRv6 network, thereby resolving a problem that a tier-1 carrier that has upgraded to SRv6 cannot provide a CSC service for a tier-2 carrier running MPLS.

In a possible implementation, the target segment identifier is a first segment identifier, and the first segment identifier is used to indicate to decapsulate a header and encapsulate a label. That the second edge network device generates, based on the third packet, a first packet including the target segment identifier includes: The second edge network device generates, based on a mapping relationship between the second label and the first segment identifier, the first packet including the first segment identifier.

Based on the mapping relationship between the second label and the first segment identifier, the first packet including the first segment identifier can be quickly generated, so that the first packet can be forwarded in the network of the tier-1 carrier that has upgraded to an SRv6 network, thereby resolving the problem that a tier-1 carrier that has upgraded to SRv6 cannot provide a CSC service for a tier-2 carrier running MPLS.

In a possible implementation, that the second edge network device generates, based on a mapping relationship between the second label and the first segment identifier, the first packet including the first segment identifier includes: The second edge network device decapsulates the second label in the third packet based on the mapping relationship between the second label and the first segment identifier, and encapsulates an SRv6 header into the decapsulated packet, where the SRv6 header includes the first segment identifier. For example, the second edge network device pops the second label in the third packet based on the mapping relationship between the first segment identifier and the second label, and encapsulates an SRv6 header into the packet with the second label popped. The SRv6 header includes the first segment identifier. In this way, the first packet including the first segment identifier is obtained. The SRv6 header encapsulated by the second edge network device includes not only an IPv6 header but also an extension header.

In a possible implementation, before the second edge network device receives the third packet including the second label, the method further includes: The second edge network device receives a second route carrying the first segment identifier; the second edge network device advertises a fourth route and the second label corresponding to the fourth route; and the second edge network device establishes the mapping relationship between the second label and the first segment identifier.

The mapping relationship between the second label and the first segment identifier is established, facilitating fast implementation of conversion of the third packet into the first packet performed in subsequent packet transmission.

In a possible implementation, the target segment identifier is a second segment identifier, and the second segment identifier is used to indicate to decapsulate a header. That the second edge network device generates, based on the third packet, a first packet including the target segment identifier includes: The second edge network device generates, based on a mapping relationship between the second label and the second segment identifier, the first packet including the second segment identifier. The first packet further includes a first flag, and the first flag is used to indicate to encapsulate a label.

Based on the mapping relationship between the second label and the second segment identifier, the first packet including the second segment identifier and the first flag can be quickly generated, so that the first packet can be forwarded in the network of the tier-1 carrier that has upgraded to an SRv6 network, thereby resolving the problem that a tier-1 carrier that has upgraded to SRv6 cannot provide a CSC service for a tier-2 carrier running MPLS.

In a possible implementation, that the second edge network device generates, based on a mapping relationship between the second label and the second segment identifier, the first packet including the second segment identifier includes: The second edge network device decapsulates the second label in the third packet based on the mapping relationship between the second segment identifier and the second label, and encapsulates an SRv6 header into the decapsulated packet, where the SRv6 header includes the second segment identifier and the first flag. For example, the second edge network device pops the second label in the third packet based on the mapping relationship between the second segment identifier and the second label, and encapsulates an SRv6 header into the packet with the second label popped. The SRv6 header includes the second segment identifier and the first flag. In this way, the first packet including the first segment identifier and the first flag is obtained. The SRv6 header encapsulated by the second edge network device includes not only an IPv6 header but also an extension header.

In a possible implementation, before the second edge network device receives the third packet including the second label, the method further includes: The second edge network device receives a third route carrying the second segment identifier; the second edge network device advertises a fourth route and the second label corresponding to the fourth route; and the second edge network device establishes the mapping relationship between the second label and the second segment identifier.

The mapping relationship between the second label and the second segment identifier is established, facilitating fast implementation of conversion of the third packet into the first packet performed in subsequent packet transmission.

In a possible implementation, before the second edge network device advertises the fourth route and the second label corresponding to the fourth route, the method further includes: The second edge network device allocates the second label to the fourth route.

In a possible implementation, the second label is an MPLS label.

In a possible implementation, the first flag is located in a flag field in a segment routing header SRH in the first packet.

According to claim 7,a second edge network device receives a third packet including a second label includes: The ingress PE device receives the third packet that includes the second label and that is sent by a customer edge CE device in the third network. That the second edge network device sends the first packet includes: The ingress PE device in the first network sends the first packet to an egress PE device in the first network. The third packet is a data packet, and the first packet is a data packet.

In a possible implementation, that the second edge network device receives a second route carrying the first segment identifier includes: The ingress PE device in the first network receives the second route that carries the first segment identifier and that is sent by the egress PE device in the first network.

In a possible implementation, that the second edge network device receives a third route carrying the second segment identifier includes: The ingress PE device in the first network receives the third route that carries the second segment identifier and that is sent by the egress PE device in the first network.

In a possible implementation, that the second edge network device advertises a fourth route and the second label corresponding to the fourth route includes: The ingress PE device in the first network advertises the fourth route and the second label corresponding to the fourth route to the CE device in the third network.

In a possible implementation, the first network and the third network are located in different autonomous systems.

According to a third aspect, a packet sending apparatus according to claim 16 is provided.

In a possible implementation, the target segment identifier is a first segment identifier, and the first segment identifier is used to indicate to decapsulate a header and encapsulate a label; and
the generation module is configured to: decapsulate an SRv6 header in the first packet based on the first segment identifier, and encapsulate the first label into the decapsulated packet based on a mapping relationship between the first segment identifier and the first label, to obtain the second packet including the first label.

In a possible implementation, the apparatus further includes:
a second receiving module, configured to receive a first route and the first label corresponding to the first route;
a first advertising module, configured to advertise, based on the first route, a second route carrying the first segment identifier; and
a first establishment module, configured to establish the mapping relationship between the first label and the first segment identifier.

In a possible implementation, the target segment identifier is a second segment identifier, the first packet further includes a first flag, the second segment identifier is used to indicate to decapsulate a header, and the first flag is used to indicate to encapsulate a label; and
the generation module is configured to: decapsulate an SRv6 header in the first packet based on the second segment identifier, and encapsulate the first label into the decapsulated packet based on an indication of the first flag and a mapping relationship between the second segment identifier and the first label, to obtain the second packet including the first label.

In a possible implementation, the apparatus further includes:
a second receiving module, configured to receive a first route and the first label corresponding to the first route;
a second advertising module, configured to advertise, based on the first route, a third route carrying the second segment identifier; and
a second establishment module, configured to establish the mapping relationship between the first label and the second segment identifier.

In a possible implementation, the first label is a multiprotocol label switching MPLS label.

According to the invention, the first edge network device is an egress provider edge PE device in a first network in a carrier's carrier CSC system, the CSC system further includes a second network, the first network is an SRv6 network, the second network accesses the first network in an MPLS manner, the first network is a network of a tier-1 carrier, and the second network is a network of a tier-2 carrier.

In a possible implementation, the first receiving module is configured to receive the first packet that includes the target segment identifier and that is sent by an ingress PE device in the first network; and
the sending module is configured to send the second packet to a customer edge CE device in the second network, where
the first packet is a data packet, and the second packet is a data packet.

In a possible implementation, the second receiving module is configured to receive the first route and the first label corresponding to the first route that are sent by the customer edge CE device in the second network.

In a possible implementation, the first advertising module is configured to advertise the second route carrying the first segment identifier to the ingress PE device in the first network.

In a possible implementation, the second advertising module is configured to advertise the third route carrying the second segment identifier to the ingress PE device in the first network.

In a possible implementation, the first network and the second network are located in different autonomous systems.

According to a fourth aspect, a packet sending apparatusaccording to claim 16 is provided.

In a possible implementation, the target segment identifier is a first segment identifier, and the first segment identifier is used to indicate to decapsulate a header and encapsulate a label; and
the generation module is configured to generate, based on a mapping relationship between the second label and the first segment identifier, the first packet including the first segment identifier.

In a possible implementation, the generation module is configured to: decapsulate the second label in the third packet based on the mapping relationship between the second label and the first segment identifier, and encapsulate an SRv6 header into the decapsulated packet, where the SRv6 header includes the first segment identifier.

In a possible implementation, the apparatus further includes:
a second receiving module, configured to receive a second route carrying the first segment identifier;
an advertising module, configured to advertise a fourth route and the second label corresponding to the fourth route; and
a first establishment module, configured to establish the mapping relationship between the second label and the first segment identifier.

In a possible implementation, the target segment identifier is a second segment identifier, and the second segment identifier is used to indicate to decapsulate a header; and
the generation module is configured to generate, based on a mapping relationship between the second label and the second segment identifier, the first packet including the second segment identifier, where the first packet further includes a first flag, and the first flag is used to indicate to encapsulate a label.

In a possible implementation, the generation module is configured to: decapsulate the second label in the third packet based on the mapping relationship between the second segment identifier and the second label, and encapsulate an SRv6 header into the decapsulated packet, where the SRv6 header includes the second segment identifier and the first flag.

In a possible implementation, the apparatus further includes:
a third receiving module, configured to receive a third route carrying the second segment identifier;
an advertising module, configured to advertise a fourth route and the second label corresponding to the fourth route; and
a second establishment module, configured to establish the mapping relationship between the second label and the second segment identifier.

In a possible implementation, the second label is an MPLS label.

In a possible implementation, the first flag is located in a flag field in a segment routing header SRH in the first packet.

According to the invention, the second edge network device is an ingress provider edge PE device in a first network in a carrier's carrier CSC system, the CSC system further includes a third network, the first network is an SRv6 network, the third network accesses the first network in an MPLS manner, the first network is a network of a tier-1 carrier, and the third network is a network of a tier-2 carrier.

In a possible implementation, the first receiving module is configured to receive the third packet that includes the second label and that is sent by a customer edge CE device in the third network; and
the sending module is configured to send the first packet to an egress PE device in the first network, where
the third packet is a data packet, and the first packet is a data packet.

In a possible implementation, the second receiving module is configured to receive the second route that carries the first segment identifier and that is sent by the egress PE device in the first network.

In a possible implementation, the third receiving module is configured to receive the third route that carries the second segment identifier and that is sent by the egress PE device in the first network.

In a possible implementation, the advertising module is configured to advertise the fourth route and the second label corresponding to the fourth route to the CE device in the third network.

In a possible implementation, the apparatus further includes an allocation module, configured to allocate the second label to the fourth route.

In a possible implementation, the first network and the third network are located in different autonomous systems.

According to a fifth aspect, a network device is provided, including a processor. The processor is coupled to a memory. The memory stores at least one program instruction or code. The at least one program instruction or code is loaded and executed by the processor, to enable the network device to implement the packet sending method according to any one of the first aspect or the second aspect.

According to a sixth aspect, a computer-readable storage medium is provided. The storage medium stores at least one program instruction or code. The program instruction or code is loaded and executed by a processor, to enable a computer to implement the packet sending method according to any one of the first aspect or the second aspect.

According to a seventh aspect, a packet sending systemaccording to claim 17 is provided. The system includes a first edge network device and a second edge network device. The first edge network device is configured to perform the packet sending method according to any one of the first aspect or the possible implementations of the first aspect. The second edge network device is configured to perform the packet sending method according to any one of the second aspect or the possible implementations of the second aspect.

### BRIEF DESCRIPTION OF DRAWINGS

FIG. 1 is a schematic diagram of a carrier's carrier network;
FIG. 2 is a schematic diagram of a control plane of a transmission process of a route in a CSC system;
FIG. 3 is a schematic diagram of a forwarding plane of a transmission process of a data packet in a CSC system;
FIG. 4 is a flowchart of a packet sending method according to an embodiment of the present invention;
FIG. 5 is a schematic diagram of a structure of an SRv6 packet;
FIG. 6 is a flowchart of a packet sending method according to an embodiment of the present invention;
FIG. 7 is a schematic diagram of a process of route information exchange according to an embodiment of the present invention;
FIG. 8 is a flowchart of a packet sending method according to an embodiment of the present invention;
FIG. 9 is a schematic diagram of a process of route information exchange according to an embodiment of the present invention;
FIG. 10 is a flowchart of a packet sending method according to an embodiment of the present invention;
FIG. 11 is a schematic diagram of a CSC network according to an embodiment of the present invention;
FIG. 12 is a schematic diagram of a packet sending process according to an embodiment of the present invention;
FIG. 13 is a schematic diagram of another CSC network according to an embodiment of the present invention;
FIG. 14 is a schematic diagram of a structure of a packet sending apparatus according to an embodiment of the present invention;
FIG. 15 is a schematic diagram of a structure of a packet sending apparatus according to an embodiment of the present invention;
FIG. 16 is a schematic diagram of a structure of a packet sending apparatus according to an embodiment of the present invention;
FIG. 17 is a schematic diagram of a structure of a packet sending apparatus according to an embodiment of the present invention;
FIG. 18 is a schematic diagram of a structure of a packet sending apparatus according to an embodiment of the present invention;
FIG. 19 is a schematic diagram of a structure of a packet sending apparatus according to an embodiment of the present invention;
FIG. 20 is a schematic diagram of a structure of a network device according to an embodiment of the present invention;
FIG. 21 is a schematic diagram of a structure of a network device according to an embodiment of the present invention; and
FIG. 22 is a schematic diagram of a structure of a network device according to an embodiment of the present invention.

### DESCRIPTION OF EMBODIMENTS

Terms used in embodiments of this application are only used to explain specific embodiments of this application, but are not intended to limit this application. The following describes embodiments of the present invention with reference to accompanying drawings.

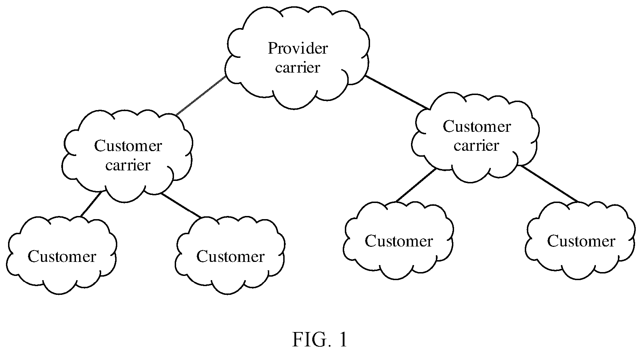

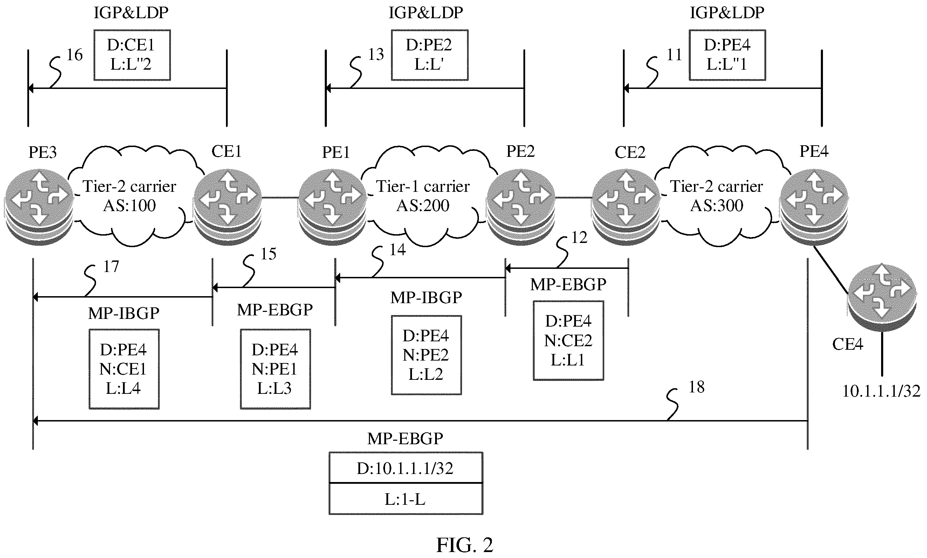

In a CSC network, a low level SP is a VPN customer of a higher level SP. As shown in FIG. 1, a CSC network includes a provider carrier (provider carrier) and a customer carrier (customer carrier). The provider carrier (provider carrier) is also referred to as a tier-1 carrier (first carrier), and the customer carrier (customer carrier) is also referred to as a tier-2 carrier (second carrier). When the tier-2 carrier runs a BGP/MPLS VPN, and a backbone network of the tier-1 carrier and a site (site) of the tier-2 carrier are in different autonomous systems (autonomous system, AS), a process of route information exchange is shown in FIG. 2. D represents a destination address of a route, N represents a next hop, and L represents a label.

In a CSC system shown in FIG. 2, the CSC system includes a first network, a second network, and a third network. The three networks are in different ASs. As shown in FIG. 2, the first network is in an AS 200, the second network is in an AS 300, and the third network is in an AS 100. A PE is a provider edge (provider edge) device. For example, in FIG. 2, a PE1 is an ingress PE device in the first network, a PE2 is an egress PE device in the first network, and a PE3 and a PE4 are a PE device in the second network and a PE device in the third network, respectively. A CE is a customer edge (customer edge) device. For example, a CE1 and a CE2 in FIG. 2 are CE devices through which the third network and the second network are connected to the first network, respectively. For example, the PE and CE devices include but are not limited to a router or a switch. The exchange process shown in FIG. 2 is a schematic diagram of a control plane of a transmission process of a route in the CSC system. The first network is a network of a tier-1 carrier, and the second network and the third network are networks of a tier-2 carrier. Next, an example in which the PE4 advertises a VPN route 10.1.1.1/32 to the PE3 is used to describe a process of route exchange between the PEs of the second network and the third network, that is, between the PEs of the tier-2 carrier. The process includes but is not limited to the following several processes.

11: The PE4 advertises a route to the PE4 (destination D: PE4) to the CE2 by using an interior gateway protocol (interior gateway protocol, IGP) of the second network, namely, the tier-2 carrier (second carrier), also allocates a label L"1 to a next hop of the IGP for the route to the PE4 (destination D: PE4), and sets up a public network label switched path (label switching path, LSP) tunnel between the PE4 and the CE2 based on a label distribution protocol (label distribution protocol, LDP).

12: The CE2 allocates a label L1 to the route to the PE4 (destination D: PE4; next hop N: CE2) by using a multiprotocol external border gateway protocol (multi protocol external border gateway protocol, MP-EBGP) connection established between the CE2 and the PE2, and advertises the label L1 and information about the route (destination D: PE4; next hop N: CE2) to the PE2.

13: The PE2 advertises a route to the PE2 to the PE1 by using an IGP of the first network, also allocates a public network label L' to the route to the PE2, and sets up a public network LSP between the PE2 and the PE1.

14: The PE2 allocates a label L2 to the route to the PE4 (destination D: PE4; next hop N: PE2), and advertises information about the route (destination D: PE4; next hop N: PE2) and the label L2 to the PE1 by using a multiprotocol internal border gateway protocol (multi protocol internal border gateway protocol, MP-IBGP).

15: The PE1 allocates a label L3 to the route to the PE4 (destination D: PE4; next hop N: PE1) by using an MP-EBGP connection established between the PE1 and the CE1, and advertises information about the route (destination D: PE4; next hop N: PE1) and the label L3 to the CE1.

16: The CE1 advertises a route to the CE1 to the PE3 by using an IGP of the third network, also allocates a public network label L"2 to the route to the CE1, and sets up a public network LSP of the third network between the CE1 and the PE3.

17: The CE1 allocates a label L4 to the route to the PE4 (destination D: PE4; next hop N: CE1), and advertises information about the route (destination D: PE4; next hop N: CE1) and the label L4 to the PE3 by using an MP-IBGP connection established between the CE1 and the PE3.

18: At this time, the route to the PE4 and the label are advertised to the PE3, and a BGP LSP is formed between the PE4 and the PE3. In other words, when the information about the route to the PE4 is successfully advertised to the PE3, an MP-EBGP connection is successfully established between the PE3 and the PE4. The PE4 allocates a private network label I-L to the VPN route 10.1.1.1/32 and sends the route 10.1.1.1/32 and the private network label I-L to the PE3 by using the MP-EBGP connection.

It should be noted that the foregoing uses only an example for description in which the PE4 advertises the route to the PE4 to the PE3. A process in which the PE3 advertises a route to the PE3 to the PE4 is similar to the foregoing process. Therefore, details are not described herein again.

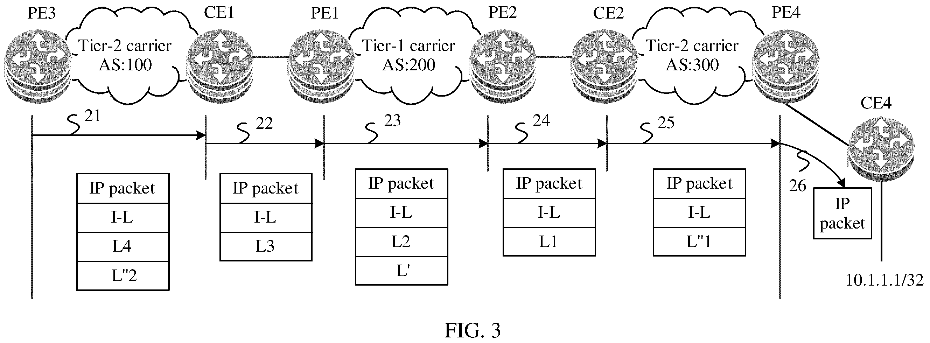

In addition to supporting route information exchange, the CSC system supports transmission of a data packet. A schematic diagram of a forwarding plane of a transmission process of a data packet in a CSC system is shown in FIG. 3. For example, the data packet is a VPN packet. In FIG. 3, I-L represents a private network label, L' represents a public network label of a first network, L"1 and L"2 represent public network labels of a second network and a third network, respectively, and L1, L2, L3, and L4 represent labels allocated to a route to a PE4. Next, an example in which a packet with a destination address of 10.1.1.1/32 is sent is used to describe a packet sending method. The method includes but is not limited to the following several processes.

21: After receiving the VPN packet (IP packet) with the destination address of 10.1.1.1/32, a PE3 pushes (push) the private network label I-L, the label L4, and the outer public network label L"2 onto the VPN packet, and transmits the packet including the private network label I-L, the label L4, and the outer public network label L"2 to a CE1 by using a public network LSP tunnel of the third network.

Before transmitting the packet to the CE1, a previous-hop LSR of the CE1 pops the outer public network label L"2.

22: The CE1 performs label switching, that is, popping the label L4 and pushing the label L3, and forwards the packet including the private network label I-L and the label L3 to a PE1.

23: The PE1 also performs label switching, that is, popping the label L3 and pushing the label L2, then pushes the public network label L', and transmits the packet including the private network label I-L, the label L2, and the public network label L' to a PE2 by using a public network tunnel LSP.

The public network label L' is popped at a previous-hop LSR of the PE2.

24: The PE2 also performs label switching, that is, popping the label L2 and pushing the label L1, and forwards the packet including the private network label I-L and the label L1 to a CE2.

25: The CE2 pops the label L1, then pushes the public network label L"1 of the second network, and transmits the packet including the private network label I-L and the public network label L"1 to the PE4 by using an LSP tunnel of the second network.

Before transmitting the packet including the private network label I-L and the public network label L"1 to the PE4, a previous-hop LSR of the PE4 pops the public network label L"1 of a tier-2 carrier.

26: The PE4 pops the private network label I-L, and forwards the IP packet to a CE4 based on the private network label I-L.

In the conventional CSC system, MP-EBGP is used between the first network, the second network, and the third network, and MP-IBGP is used inside the first network, inside the second network, and inside the third network. After a route to a loopback interface of the PE4 in the second network is advertised to the PE3 in the third network, the second network and the third network are enabled to establish an end-to-end service, which does not need to be perceived by a tier-1 carrier.

However, after the first network is upgraded to SRv6, the first network uses SRv6 tunnels to bear VPN traffic, but the second network and the third network of the tier-2 carrier are not upgraded and still access the first network in a conventional MPLS manner. In this case, an ingress PE device in the first network cannot convert MPLS-encapsulated VPN traffic into SRv6-encapsulated VPN traffic. Likewise, an egress PE device in the first network cannot convert SRv6-encapsulated VPN traffic into MPLS-encapsulated VPN traffic. Because of this, the tier-1 carrier that has upgraded to SRv6 cannot provide a CSC service for the tier-2 carrier running MPLS. Therefore, the tier-1 carrier needs to provide an SRv6-based CSC solution.

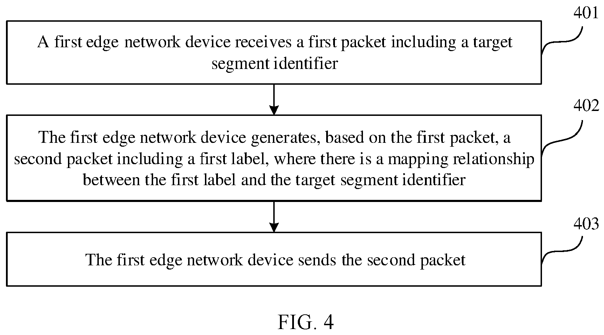

In view of this, an embodiment of the present invention provides a technical solution, to enable an ingress PE device of the tier-1 carrier to convert MPLS-encapsulated VPN traffic into SRv6-encapsulated VPN traffic, and likewise, to enable an egress PE device of the tier-1 carrier to convert SRv6-encapsulated VPN traffic into MPLS-encapsulated VPN traffic. In this way, the tier-1 carrier that has upgraded to SRv6 can provide the CSC service for the tier-2 carrier running MPLS. A description is provided by using an example in which an egress PE (PE2) device of a tier-1 carrier is a first edge network device, and the first edge network device performs a packet sending method. As shown in FIG. 4, the packet sending method includes but is not limited to the following several processes.

### 401: A first edge network device receives a first packet including a target segment identifier.

Herein, the first packet is a data packet.

The first edge network device is an egress PE device of a tier-1 carrier that has upgraded to SRv6 in a CSC system. A network path in SRv6 is divided into segments. Each segment (segment) is identified by a segment identifier (segment ID, SID). The SID is an IPv6 address, and has both a routing capability of a common IPv6 address and an SRv6 specific behavioral capability. Each SRv6 node maintains an SID table (which is a part of a routing table). The SID table includes many 128-bit SIDs. An SID in a standard format includes a locator (locator) field and a function (Function) field, and optionally, further includes a parameter (Args) field.

Locator is a locator identifying an SRv6 node. Each node has a globally unique locator value, which is used as a shared prefix of a local SID. Another node accesses an SID of a local node by using a locator route. Function identifies different behaviors in an SRv6 node, such as END and END.X. For a few behaviors, the Args parameter further needs to be transferred. After receiving an IPv6 packet, an SRv6 node searches a global routing table based on an IPv6 destination address (destination address, DA). If an SID is matched, a behavior defined by the SID performs processing. If no SID is matched, a normal routing and forwarding action is performed. Therefore, the first edge network device receives the first packet transmitted in an SRv6 tunnel. The first packet includes the target segment identifier. Content of the target segment identifier is not limited in this embodiment of the present invention. In this embodiment of the present invention, to implement end-to-end service provisioning with no need to upgrade a network of a tier-2 carrier, the target segment identifier in this embodiment of the present invention is used to indicate to decapsulate a header and encapsulate a label, enabling the first packet to be transmitted in an MPLS tunnel.

In a possible implementation, the target segment identifier is a first segment identifier, and the first segment identifier is used to indicate to decapsulate a header and encapsulate a label. In an example implementation, an SRv6 protocol is extended, and a first segment identifier SRv6 SID (END.DM) is newly added. A function of the SRv6 SID is to decapsulate an SRv6 header and encapsulate an MPLS label. It may be understood as that the function of the SRv6 SID is to connect an SRv6 tunnel and an MPLS tunnel.

Processing logic of the END.DM SID is described as follows: For example:

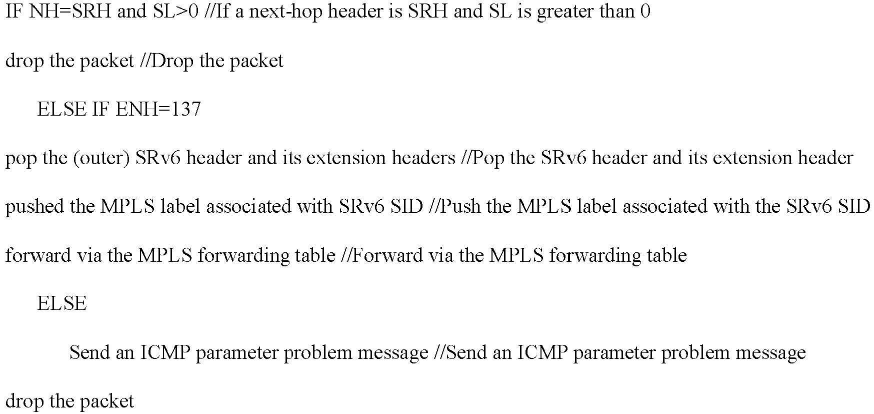

In addition to the manner of adding a new SID to indicate to decapsulate a header and encapsulate a label, thereby connecting an SRv6 tunnel and an MPLS tunnel, this embodiment of the present invention supports a manner of combining an SID and a flag to indicate to decapsulate a header and encapsulate a label. Therefore, in a possible implementation, the target segment identifier is a second segment identifier, the first packet further includes a first flag, the second segment identifier is used to indicate to decapsulate a header, and the first flag is used to indicate to encapsulate a label.

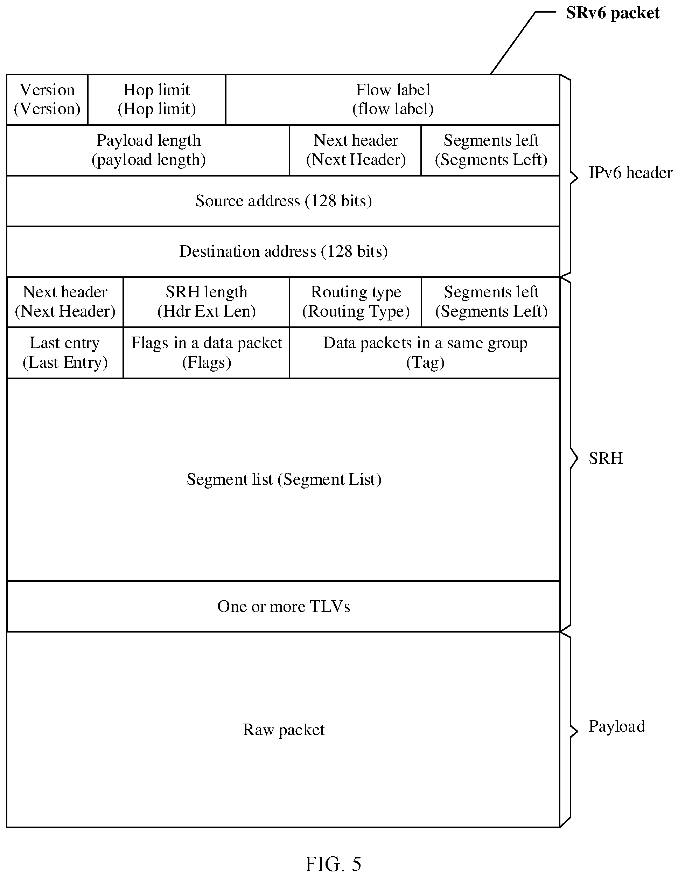

Neither content of the first flag nor a location of the first flag in a packet is limited in this embodiment of the present invention. In an SRv6 scenario, to implement SRv6 based on a forwarding plane of IPv6, an IPv6 extension header is newly added. The IPv6 extension header is a segment routing header (segment routing header, SRH) defined based on an original routing extension header of an IPv6 packet, and is also referred to as an SRH extension header. The SRH extension header may be used to specify an IPv6 path, or may specify a service (service), and stores a plurality of segment identifiers of IPv6. A head node sending a packet adds one or more SRH extension headers to the packet, and an intermediate node can forward the IPv6 packet based on path information included in the SRH extension headers. For example, a structure of an SRv6 packet is shown in FIG. 5. The SRv6 packet includes an IPv6 header, an SRH, and a payload. The payload in the SRv6 packet is, for example, an IPv4 packet, an IPv6 packet, or an ethernet (ethernet) frame. The payload in the SRv6 packet may be referred to as a raw packet. The IPv6 header includes a source address (source address, SA) and a DA. In a common IPv6 packet, an IPv6 DA is fixed. In SRv6, an IPv6 DA identifies a next node of a current packet. In an SR tunnel, SR nodes continuously update the destination address to complete hop-by-hop forwarding. An SID carried in the destination address in the IPv6 header is referred to as an active SID. The SRH is an IPv6 extension header. The SRH is used to implement SRv6 based on the forwarding plane of IPv6. Meanings of fields in the SRH are provided below.
**Next Header (Next Header):** An SRv6 packet may include one or more extension headers or one or more high-layer headers that follow an extension header. Next Header is used to identify a type of a header that immediately follows the SRH. A length of the Next Header field may be eight bits.
**Header Extended Length (header Extended Length, Hdr Ext Len):** used to indicate a length of the SRH header. The length of the SRH header is mainly a length of segment lists, for example, a length occupied by a segment list [0] to a segment list [n].
**Routing Type (Routing Type):** used to identify a type of the routing header. A type of the SRH is 4. A length of the Routing Type field may be eight bits.
**Segments Left (Segments Left,** SL): used to indicate a quantity of intermediate nodes that should still be accessed before a destination node is reached. The SL field may also be referred to as a Nodes Left field. A value of the SL field may indicate an active SID in a segment list. A length of SL may be eight bits. For example, if a segment list includes five SIDs, namely, an SID 0, an SID 1, an SID 2, an SID 3, and an SID 4, and the value of SL is 2, it indicates that there are two SIDs in the segment list that are not processed, namely, the SID 0 and the SID 1, an SID currently to be processed in the segment list is the SID 2, and there are two SIDs in the segment list that have been processed, namely, the SID 3 and the SID 4.
**Last Entry (Last Entry):** is an index of a last element included in a segment list. A length of the Last Entry field may be eight bits.
**Flags (Flags):** used to indicate some flags of a data packet. A length of the Flags field may be eight bits.
**Tag:** used to identify a data packet in a same group. A length of the Tag field may be 16 bits.
**Segment List (Segment list[n]):** may include one or more SIDs. Each SID may be in a form of an IPv6 address. Therefore, the segment list may also be understood as an explicit IPv6 address stack. The segment list may be denoted as segment list[n]. A length of segment list[n] is 128*n bits. The segment list may be encoded from a last segment of a path. The segment list is in a form of an IPv6 address.
**TLV:** is an encoding format. The TLV includes a type (type), a length (length), and a value (value). An SRH may include one or more TLVs. There may be a parallel relationship or a nested relationship between different TLVs in an SRH.

In a possible implementation, the first flag is set in the Flags field in the SRH. The Flags field is used to indicate to encapsulate a label. For example, in a definition, a value of a designated bit of the eight bits of the Flags field is 1 and is used to indicate to encapsulate a label. In this way, a function of indicating to decapsulate a header and encapsulate a label is implemented by using the second segment identifier and the first flag.

It should be noted that the foregoing manner of using the first segment identifier or using the second segment identifier and the first flag is merely an example description of the function of indicating to decapsulate a header and encapsulate a label. Besides the manners, any other manner capable of indicating to decapsulate a header and encapsulate a label falls within the protection scope of embodiments of the present invention.

### 402: The first edge network device generates, based on the first packet, a second packet including a first label, where there is a mapping relationship between the first label and the target segment identifier.

Herein, the second packet is a data packet.

Depending on different cases of the target segment identifier described in 401, a manner in which the first edge network device generates, based on the first packet, the second packet including the first label also includes but is not limited to any one of the following two manners.

**Manner 1:** The target segment identifier is the first segment identifier, and the first segment identifier is used to indicate to decapsulate a header and encapsulate a label. That the first edge network device generates, based on the first packet, a second packet including a first label includes: The first edge network device decapsulates an SRv6 header in the first packet based on the first segment identifier, and encapsulates the first label into the decapsulated packet based on a mapping relationship between the first segment identifier and the first label, to obtain the second packet including the first label.

The first segment identifier is used to indicate to decapsulate a header and encapsulate a label. Therefore, based on the first segment identifier, the first edge network device can be triggered to convert the first packet into the second packet, so that the second packet can be transmitted in the network of the tier-2 carrier running MPLS. That the first edge network device decapsulates an SRv6 header in the first packet based on the first segment identifier includes not only decapsulating an IPv6 header. If the first packet further includes an extension header, the first edge network device further needs to decapsulate the extension header and then encapsulates the first label into the decapsulated packet. The first label is an MPLS label. A manner of establishing the mapping relationship between the first label and the first segment identifier is not limited in this embodiment of the present invention, and may be determined in a process of route information exchange. For example, before the first edge network device generates, based on the first packet, the second packet including the first label, the method further includes: The first edge network device receives a first route and the first label corresponding to the first route; the first edge network device advertises, based on the first route, a second route carrying the first segment identifier; and the first edge network device establishes the mapping relationship between the first label and the first segment identifier. The mapping relationship between the first segment identifier and the first label is established during route advertisement, facilitating fast implementation of conversion of the first packet into the second packet performed in subsequent packet transmission.

The first route is a route advertised by a CE in the network of the tier-2 carrier. The CE allocates the first label to the first route. After receiving the first route, the first edge network device advertises the second route carrying the first segment identifier. In addition, to implement conversion between a segment identifier and a label subsequently, the first edge network device establishes the mapping relationship between the first label and the first segment identifier. After establishing the mapping relationship between the first label and the first segment identifier, the first edge network device stores the mapping relationship for application of the mapping relationship in a subsequent packet transmission process.

**Manner 2:** The target segment identifier is the second segment identifier, the first packet further includes the first flag, the second segment identifier is used to indicate to decapsulate a header, and the first flag is used to indicate to encapsulate a label. That the first edge network device generates, based on the first packet, a second packet including a first label includes: The first edge network device decapsulates an SRv6 header in the first packet based on the second segment identifier, and encapsulates the first label into the decapsulated packet based on an indication of the first flag and a mapping relationship between the second segment identifier and the first label, to obtain the second packet including the first label.

The second segment identifier is used to indicate to decapsulate a header, and the first flag is used to indicate to encapsulate a label. Therefore, based on the second segment identifier and the first flag, the first edge network device can be triggered to convert the first packet into the second packet, so that the second packet is transmitted in the network of the tier-2 carrier running MPLS. The SRv6 header that is in the first packet and that is decapsulated by the first edge network device based on the second segment identifier includes not only an IPv6 header but also an extension header. For example, the extension header is an SRH.

In the manner 2, the second segment identifier is combined with the first flag to implement an indication function of the first segment identifier in the case 1. A manner of establishing the mapping relationship between the second segment identifier and the first label is not limited in this embodiment of the present invention, and may be determined in a process of route information exchange. For the manner 2, before the first edge network device generates, based on the first packet, the second packet including the first label, the method further includes: The first edge network device receives a first route and the first label corresponding to the first route; the first edge network device advertises, based on the first route, a third route carrying the second segment identifier; and the first edge network device establishes the mapping relationship between the first label and the second segment identifier. The mapping relationship between the second segment identifier and the first label is established during route advertisement, facilitating fast implementation of conversion of the first packet into the second packet performed in subsequent packet transmission. The manner 2 is the same as the manner 1 in the manner of establishing the mapping relationship, and differs from the manner 1 only in that the segment identifier corresponding to the first label in the mapping relationship is different. After the first edge network device establishes the mapping relationship between the first label and the second segment identifier, the first edge network device stores the mapping relationship for application of the mapping relationship in a subsequent packet transmission process.

It should be noted that the manner 1 and the manner 2 are different manners that are of generating the second packet including the first label and that are taken for different cases of the target segment identifier included in the first packet. Either of the two manners is used. For example, after receiving the first route and the first label corresponding to the first route, the first edge network device may separately establish the mapping relationship between the first label and the first segment identifier and the mapping relationship between the first label and the second segment identifier. Subsequently, based on a segment identifier carried in a received first packet, the first edge network device determines a mapping relationship based on which the second packet including the first label is generated.

### 403: The first edge network device sends the second packet.

Because the second packet includes the first label, the second packet can be transmitted in an MPLS tunnel, thereby implementing that a tier-1 carrier can normally provide a service for a tier-2 carrier in a case in which a network of the tier-1 carrier is upgraded to SRv6 but a network of the tier-2 carrier is not upgraded.

For example, the first edge network device is an egress PE device in a first network (for example, the network of the tier-1 carrier in the AS 100 in the CSC system shown in FIG. 2) in a CSC system. The CSC system further includes a second network (for example, the network of the tier-2 carrier in the AS 300 in the CSC system shown in FIG. 2). The first network is an SRv6 network. The second network accesses the first network in an MPLS manner.

That the first edge network device sends the second packet includes: The egress PE device sends the second packet to a CE device in the second network. That the first edge network device receives a first route and the first label corresponding to the first route includes: The first edge network device receives the first route and the first label corresponding to the first route that are sent by the CE device in the second network.

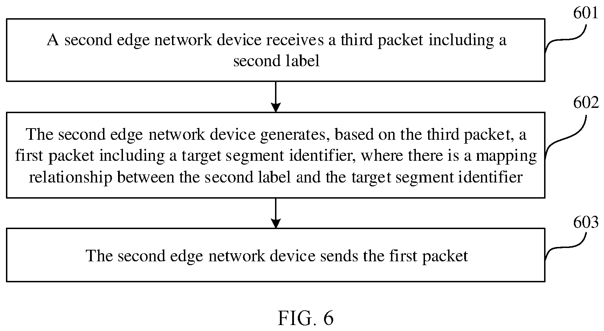

A description is provided by using an example in which an ingress PE device of a tier-1 carrier is a second edge network device, and the second edge network device performs a packet sending method. As shown in FIG. 6, the packet sending method includes but is not limited to the following several processes.

### 601: A second edge network device receives a third packet including a second label.

Herein, the third packet is a data packet.

Because the second edge network device is an ingress PE device of a tier-1 carrier, the received third packet is a packet transmitted from an MPLS tunnel. The third packet includes an MPLS label, namely, the second label. The second label is an MPLS label. As shown in FIG. 2, the second label is a label allocated to a route advertised by the second edge network device, namely, the ingress PE device (PE1) of the tier-1 carrier, to a CE (CE1) device of a tier-2 carrier, and the ingress PE device advertises the MPLS label to the CE device in a network of the tier-2 carrier.

### 602: The second edge network device generates, based on the third packet, a first packet including a target segment identifier, where there is a mapping relationship between the second label and the target segment identifier.

Herein, the first packet is a data packet.

After receiving the third packet including the second label, the second edge network device pops the second label from the third packet. In addition, because the second edge network device is the ingress PE device in a network of the tier-1 carrier, the second edge network device encapsulates a segment identifier, to enable the packet to be transmitted in an SRv6 tunnel. To determine a segment identifier to which the second label is mapped, the second edge network device may establish the mapping relationship between the second label and the corresponding target segment identifier in advance, so that after receiving the third packet including the second label, the second edge network device can generate the first packet including the target segment identifier based on the mapping relationship between the second label and the target segment identifier. A manner of establishing the mapping relationship between the second label and the target segment identifier is not limited in this embodiment of the present invention, and the mapping relationship may be established in a process of route information exchange. For example, depending on different cases of the target segment identifier, a manner in which the first packet including the target segment identifier is generated includes but is not limited to any one of the following two manners.

**Manner 1:** The target segment identifier is a first segment identifier, and the first segment identifier is used to indicate to decapsulate a header and encapsulate a label. That the second edge network device generates, based on the third packet, a first packet including a target segment identifier includes: The second edge network device generates, based on a mapping relationship between the second label and the first segment identifier, the first packet including the first segment identifier.

Based on the mapping relationship between the second label and the first segment identifier, the first packet including the first segment identifier can be quickly generated, so that the first packet can be forwarded in the network of the tier-1 carrier that has upgraded to an SRv6 network, thereby resolving a problem that a tier-1 carrier that has upgraded to SRv6 cannot provide a CSC service for a tier-2 carrier running MPLS.

In a possible implementation, that the second edge network device generates, based on a mapping relationship between the second label and the first segment identifier, the first packet including the first segment identifier includes: The second edge network device decapsulates the second label in the third packet based on the mapping relationship between the second label and the first segment identifier, and encapsulates an SRv6 header into the decapsulated packet, where the SRv6 header includes the first segment identifier. For example, the second edge network device pops the second label in the third packet based on the mapping relationship between the first segment identifier and the second label, and encapsulates an SRv6 header into the packet with the second label popped. The SRv6 header includes the first segment identifier. In this way, the first packet including the first segment identifier is obtained. The SRv6 header encapsulated by the second edge network device includes not only an IPv6 header but also an extension header.

For the manner 1, before the second edge network device receives the third packet including the second label, the method further includes: The second edge network device receives a second route carrying the first segment identifier; the second edge network device advertises a fourth route and the second label corresponding to the fourth route; and the second edge network device establishes the mapping relationship between the second label and the first segment identifier.

The second route is a route advertised by a first edge network device in the network of the tier-1 carrier, and carries the first segment identifier. After receiving the second route, the second edge network device advertises the fourth route and the second label corresponding to the fourth route. In addition, to implement conversion between a segment identifier and a label subsequently, the second edge network device establishes the mapping relationship between the second label and the first segment identifier. After establishing the mapping relationship between the second label and the first segment identifier, the second edge network device stores the mapping relationship for application of the mapping relationship in a subsequent packet transmission process, achieving fast implementation of conversion of the third packet into the first packet.

**Manner 2:** The target segment identifier is a second segment identifier, and the second segment identifier is used to indicate to decapsulate a header.That the second edge network device generates, based on the third packet, a first packet including a target segment identifier includes: The second edge network device generates, based on a mapping relationship between the second label and the second segment identifier, the first packet including the second segment identifier. The first packet further includes a first flag, and the first flag is used to indicate to encapsulate a label.

Based on the mapping relationship between the second label and the second segment identifier, the first packet including the second segment identifier and the first flag can be quickly generated, so that the first packet can be forwarded in the network of the tier-1 carrier that has upgraded to an SRv6 network, thereby resolving a problem that a tier-1 carrier that has upgraded to SRv6 cannot provide a CSC service for a tier-2 carrier running MPLS.

In a possible implementation, that the second edge network device generates, based on a mapping relationship between the second label and the second segment identifier, the first packet including the second segment identifier includes: The second edge network device decapsulates the second label in the third packet based on the mapping relationship between the second segment identifier and the second label, and encapsulates an SRv6 header into the decapsulated packet, where the SRv6 header includes the second segment identifier and the first flag. For example, the second edge network device pops the second label in the third packet based on the mapping relationship between the second segment identifier and the second label, and encapsulates an SRv6 header into the packet with the second label popped. The SRv6 header includes the second segment identifier and the first flag. In this way, the first packet including the first segment identifier and the first flag is obtained. The SRv6 header encapsulated by the second edge network device includes not only an IPv6 header but also an extension header.

For the manner 2, before the second edge network device receives the third packet including the second label, the method further includes: The second edge network device receives a third route carrying the second segment identifier; the second edge network device advertises a fourth route and the second label corresponding to the fourth route; and the second edge network device establishes the mapping relationship between the second label and the second segment identifier.

The third route is a route advertised by a first edge network device in the network of the tier-1 carrier, and carries the second segment identifier. After receiving the third route, the second edge network device allocates the second label to the fourth route. The second edge network device advertises the fourth route and the second label corresponding to the fourth route. In addition, to implement conversion between a segment identifier and a label subsequently, the second edge network device establishes the mapping relationship between the second label and the second segment identifier. After establishing the mapping relationship between the second label and the second segment identifier, the second edge network device stores the mapping relationship for application of the mapping relationship in a subsequent packet transmission process, achieving fast implementation of conversion of the third packet into the first packet.

It should be noted that either of the manner 1 and the manner 2 of generating the first packet including the target segment identifier may be used, that is, the manner of generating the first packet including the first segment identifier or the manner of generating the first packet including the second segment identifier is taken depending on different cases. For example, if the second edge network device receives the second route carrying the first segment identifier and establishes the mapping relationship between the second label and the first segment identifier in the process of route information exchange, the second edge network device may generate the first packet including the first segment identifier in the manner 1 after receiving the second packet. If the second edge network device receives the third route carrying the second segment identifier and establishes the mapping relationship between the second label and the second segment identifier in the process of route information exchange, the second edge network device may generate the first packet including the second segment identifier in the manner 2 after receiving the second packet.

If the second edge network device receives both the second route carrying the first segment identifier and the third route carrying the second segment identifier, and establishes both the mapping relationship between the second label and the first segment identifier and the mapping relationship between the second label and the second segment identifier in the process of route information exchange, the second edge network device may generate the first packet including the first segment identifier in the manner 1 or generate the first packet including the second segment identifier in the manner 2 after receiving the second packet. For a case in which the second edge network device separately establishes the mapping relationship between the second label and the first segment identifier and the mapping relationship between the second label and the second segment identifier, a mapping relationship based on which the second edge network device generates the first packet after receiving the second packet, that is, whether the second edge network device generates the first packet in the manner 1 or in the manner 2 after receiving the second packet is not limited in this embodiment of the present invention. For example, the second edge network device may randomly select a mapping relationship for generation of the first packet. Alternatively, the second edge network device uses the mapping relationships alternately for generation of the first packet. For example, if the second edge network device generates the first packet including the first segment identifier based on the mapping relationship between the second label and the first segment identifier this time, the second edge network device may generate the first packet including the second segment identifier based on the mapping relationship between the second label and the second segment identifier after receiving the second packet including the second label next time.

### 603: The second edge network device sends the first packet.

In this embodiment of the present invention, the second edge network device is an ingress PE device in a first network in a CSC system, the CSC system further includes a third network, the first network is an SRv6 network of IPv6, the third network accesses the first network in an MPLS manner, the first network is a network of a tier-1 carrier, and the third network is a network of a tier-2 carrier.

For example, that a second edge network device receives a third packet including a second label includes: The ingress PE device in the first network receives the third packet that includes the second label and that is sent by a CE device in the third network. That the second edge network device sends the first packet includes: The ingress PE device in the first network sends the first packet to an egress PE device in the first network. That the second edge network device receives a second route carrying the first segment identifier includes: The ingress PE device in the first network receives the second route that carries the first segment identifier and that is sent by the egress PE device in the first network. That the second edge network device receives a third route carrying the second segment identifier includes: The ingress PE device in the first network receives the third route that carries the second segment identifier and that is sent by the egress PE device in the first network. That the second edge network device advertises a fourth route and the second label corresponding to the fourth route includes: The ingress PE device in the first network advertises the fourth route and the second label corresponding to the fourth route to the CE device in the third network.

Because the first packet includes the target segment identifier, the first packet can be transmitted in an SRv6 tunnel, thereby implementing that a tier-1 carrier can normally provide a service for a tier-2 carrier in a case in which a network of the tier-1 carrier is upgraded to SRv6 but a network of the tier-2 carrier is not upgraded.

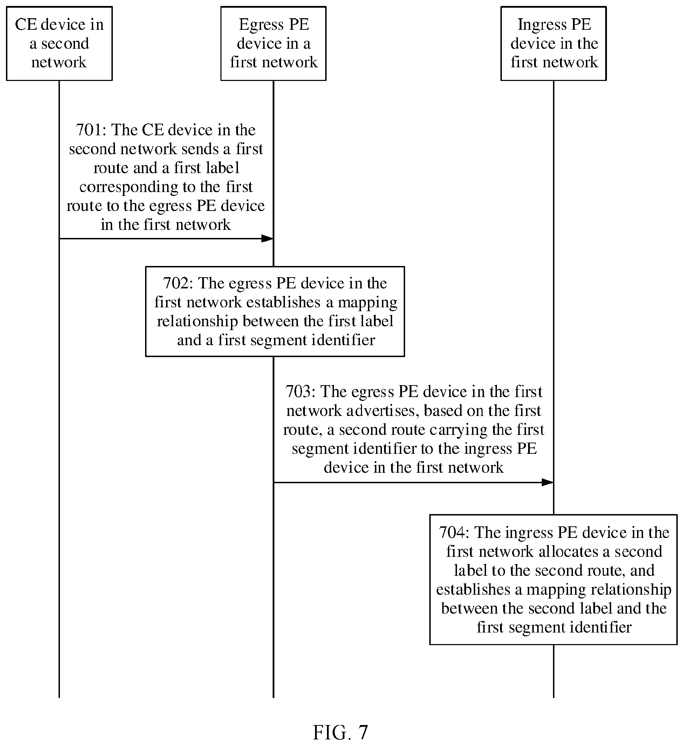

Next, based on content in FIG. 4 and FIG. 6 above, different scenarios are described by using examples. For example, by using an example in which a target segment identifier is a first segment identifier, a first edge network device is an egress PE device in a first network, and a second edge network device is an ingress PE device in the first network, for a route information exchange scenario, as shown in FIG. 7, route information exchange performed between the egress PE device in the first network and the ingress PE device in the first network includes but is not limited to the following several processes.

701: A CE device in a second network sends a first route and a first label corresponding to the first route to the egress PE device in the first network.

702: The egress PE device in the first network establishes a mapping relationship between the first label and a first segment identifier.

703: The egress PE device in the first network advertises, based on the first route, a second route carrying the first segment identifier to the ingress PE device in the first network.

704: The ingress PE device in the first network advertises a fourth route and a second label corresponding to the fourth route, and establishes a mapping relationship between the second label and the first segment identifier. Before the ingress PE device in the first network advertises the fourth route and the second label corresponding to the fourth route, the following is further included: The ingress PE device in the first network allocates the second label to the fourth route.

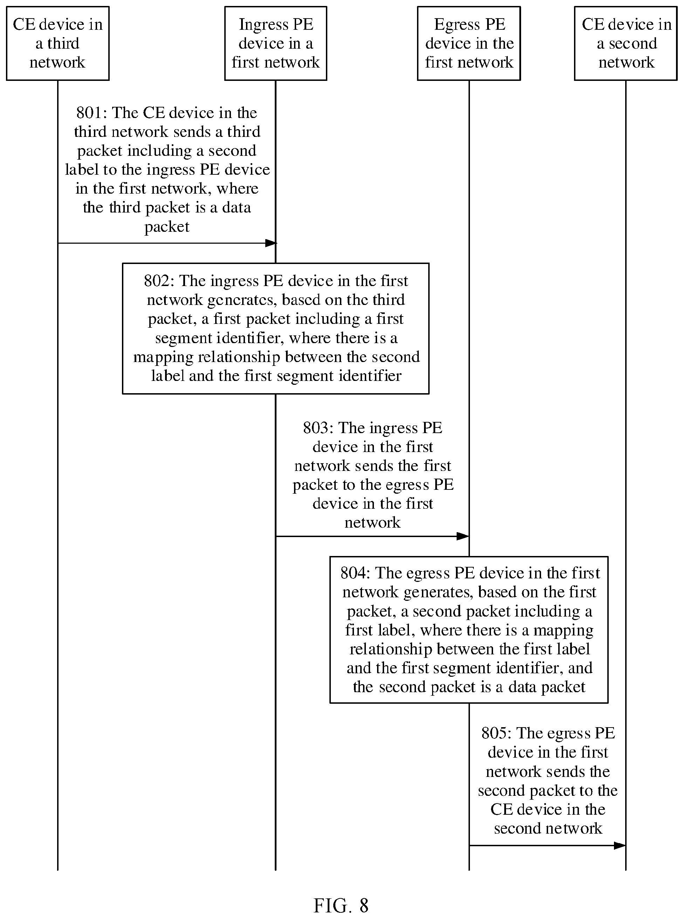

Based on a process of route information exchange shown in FIG. 7, if a CSC system further includes a third network, the second edge network device further advertises the fourth route and the second label to a CE device in the third network, so that the CE device in the third network can forward a packet based on the fourth route and the second label. When a data packet is sent between the CE device in the third network and the CE device in the second network, a data packet sending method is shown in FIG. 8, and includes but is not limited to the following several processes.

801: The CE device in the third network sends a third packet including the second label to the ingress PE device in the first network, where the third packet is a data packet.

802: The ingress PE device in the first network generates, based on the third packet, a first packet including the first segment identifier, where there is a mapping relationship between the second label and the first segment identifier, and the first packet is a data packet.

803: The ingress PE device in the first network sends the first packet to the egress PE device in the second network.

804: The egress PE device in the first network generates, based on the first packet, a second packet including the first label, where there is a mapping relationship between the first label and the first segment identifier, and the second packet is a data packet.

805: The egress PE device in the first network sends the second packet to the CE device in the second network.

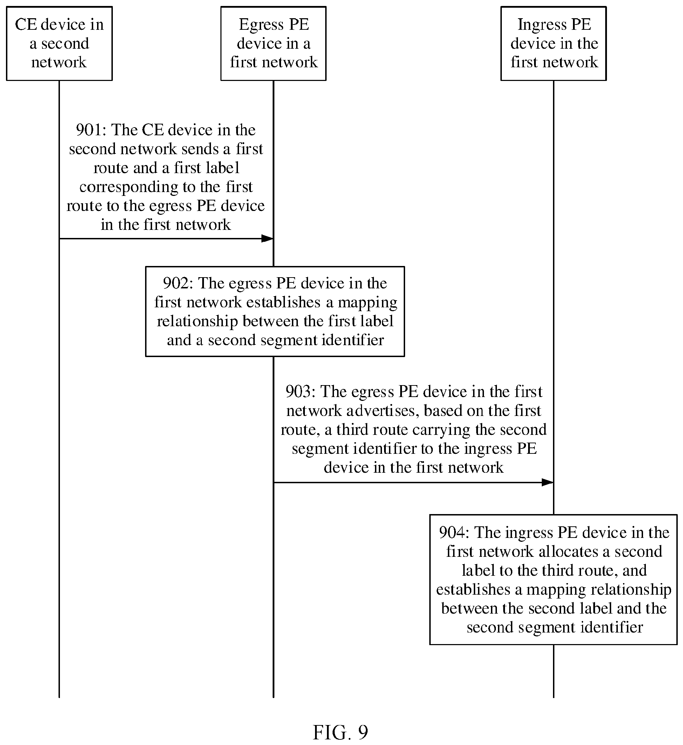

In an example in which a target segment identifier is a second segment identifier, for a route information exchange scenario, as shown in FIG. 9, route information exchange performed between an egress PE device in a first network and an ingress PE device in the first network includes but is not limited to the following several processes.

901: A CE device in a second network sends a first route and a first label corresponding to the first route to the egress PE device in the first network.

902: The egress PE device in the first network establishes a mapping relationship between the first label and a second segment identifier.

903: The egress PE device in the first network advertises, based on the first route, a third route carrying the second segment identifier to the ingress PE device in the first network.

904: The ingress PE device in the first network advertises a fourth route and a second label corresponding to the fourth route, and establishes a mapping relationship between the second label and the second segment identifier. Before the ingress PE device in the first network advertises the fourth route and the second label corresponding to the fourth route, the following is further included: The ingress PE device in the first network allocates the second label to the fourth route.

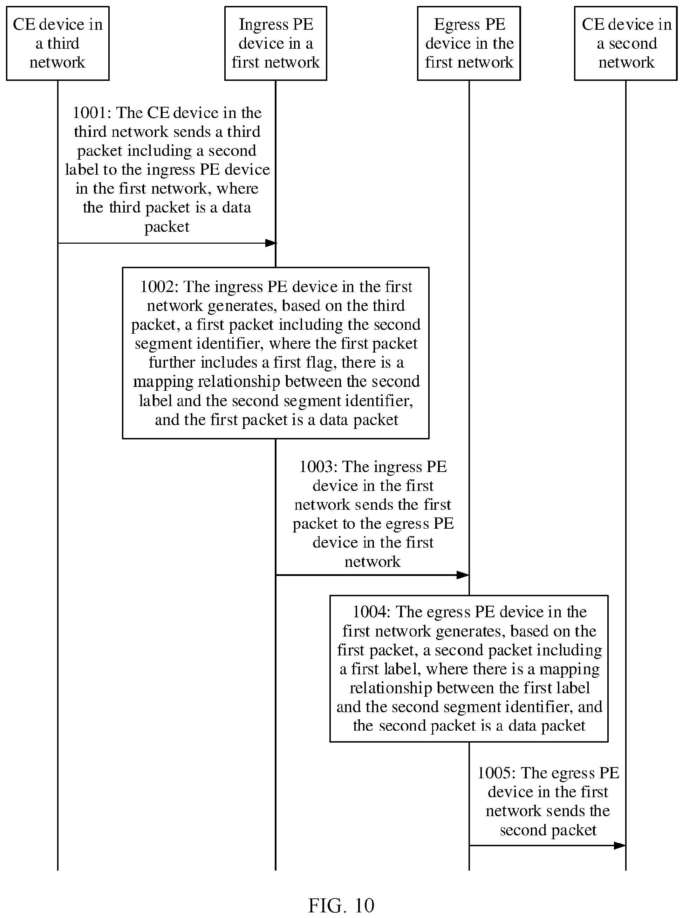

Based on a process of route information exchange shown in FIG. 9, if a CSC system further includes a third network, a second edge network device further advertises the fourth route and the second label to a CE device in the third network, so that the CE device in the third network can forward a packet based on the fourth route and the second label. When a packet is sent between the CE device in the third network and the CE device in the second network, a packet sending method is shown in FIG. 10, and includes but is not limited to the following several processes.

1001: The CE device in the third network sends a third packet including the second label to the ingress PE device in the first network, where the third packet is a data packet.

1002: The ingress PE device in the first network generates, based on the third packet, a first packet including the second segment identifier, where the first packet further includes a first flag, there is a mapping relationship between the second label and the second segment identifier, and the first packet is a data packet.

1003: The ingress PE device in the first network sends the first packet to the egress PE device in the first network.

1004: The egress PE device in the first network generates, based on the first packet, a second packet including the first label, where there is a mapping relationship between the first label and the second segment identifier, and the second packet is a data packet.

1005: The egress PE device in the first network sends the second packet to the CE device in the second network.

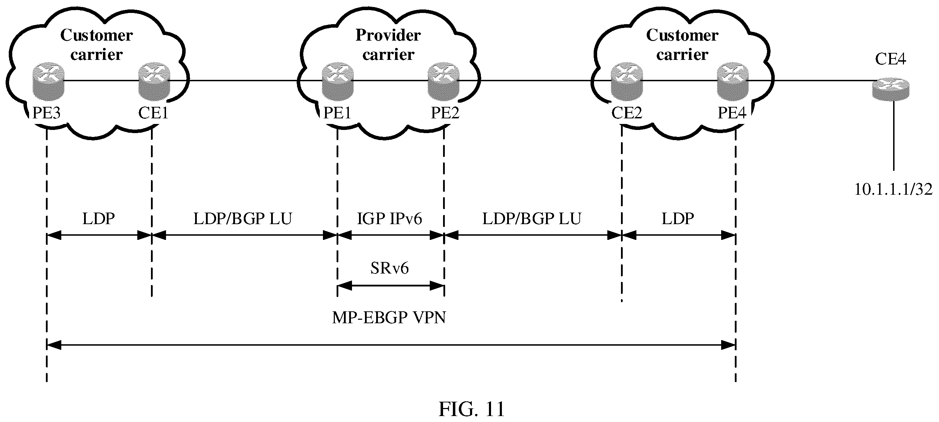

For example, the technical solution provided in embodiments of the present invention is applied to a schematic diagram of a network shown in FIG. 11. In FIG. 11, a PE1 and a PE2 are located in a first network. The first network is a network of a tier-1 carrier (provider carrier) and has been upgraded to support SRv6. The PE1 is an ingress PE device of the tier-1 carrier, and the PE2 is an egress PE device of the tier-1 carrier. A CE1 and a CE2 access a backbone network of the tier-1 carrier as CE devices. A PE3 and a PE4 are devices of a tier-2 carrier and provide access for customers of the tier-2 carrier. The CE1, CE2, PE3, and PE4 are located in networks of the tier-2 carrier, support MPLS forwarding, and do not support SRv6. The PE3 and the CE1 are located in a third network, and the PE4 and the CE2 are located in a second network. The second network and the third network are both the networks of the tier-2 carrier (customer carrier). Optionally, the second network and the third network may be networks of different tier-2 carriers, or may be networks of a same tier-2 carrier.

### For a route information exchange scenario:

For example, the PE4 advertises a VPN route 10.1.1.1/32 to the PE3. The PE2 receives, from the CE2, a route (destination D: PE4; next hop N: CE2) and a first MPLS label that are advertised by the CE2. A route advertised by the PE2 to the PE1 carries an SRv6 SID (END.DM). The PE2 establishes a mapping relationship between the SRv6 SID and the first MPLS label. The first MPLS label is an MPLS label that is allocated to a route (destination D: PE4; next hop N: CE2) advertised by the CE2 to the PE2.

The PE1 receives the route carrying the SRv6 SID, and establishes a mapping relationship between a second MPLS label and the SRv6 SID when advertising a route to the CE1 by using LDP or BGP labeled unicast (label-unicast, LU). The second MPLS label is an MPLS label that is advertised by the PE1 to the CE1 and that is allocated by the PE1 to the route (destination D: PE4; next hop N: PE1) advertised to the CE1. Then, the CE1 advertises the route to the PE4 (destination D: PE4; next hop N: CE1) to the PE3 by using LDP

It should be noted that in addition to using a manner of carrying the SRv6 SID (END.DM) that is used to decapsulate an IPv6 header and encapsulate an MPLS header, optionally, the route advertised by the PE2 to the PE1 may not use the manner of carrying the SRv6 SID (END.DM) but uses a manner of carrying another segment identifier, namely, the second segment identifier in 401 above. The second segment identifier is used to indicate to decapsulate a header. Regardless of which manner of carrying a segment identifier is used, after the route to the PE4 is advertised to the PE3, the PE3 and the PE4 establish an MP-EBGP service, for example, a VPN service.

### For a packet sending scenario:

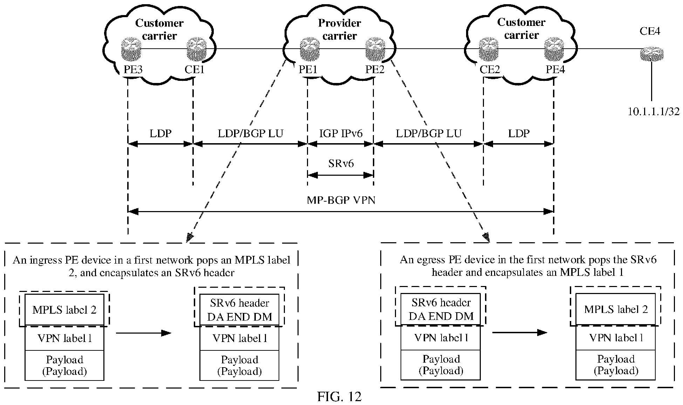

As shown in FIG. 12, for example, the PE3 sends a packet with a destination address of 10.1.1.1/32 to the PE4. The packet is sent to the PE1. The PE1 receives the VPN packet encapsulated with the second MPLS label (for example, an MPLS label 2 shown in FIG. 12). In addition to the second MPLS label and a payload, the packet is encapsulated with a VPN label 1 (the VPN label 1 is associated with the destination address 10.1.1.1/32). The PE1 strips off the second MPLS label based on the previously stored mapping relationship between the second MPLS label and the SRv6 SID, and then encapsulates an SRv6 header by using the SRv6 SID (END.DM). The packet encapsulated with the SRv6 header is forwarded by using SRv6 in the network of the tier-1 carrier. After receiving the SRv6-encapsulated (including the SRv6 SID) packet, the PE2 pops (that is, strips off) the SRv6 header based on the previously stored mapping relationship between the SRv6 SID (END.DM) and the first MPLS label, and then encapsulates the first MPLS label (for example, an MPLS label 1 shown in FIG. 12) to generate a new packet. The new packet is sent to the CE2, and forwarded by using MPLS in the tier-2 carrier's network including the CE2.

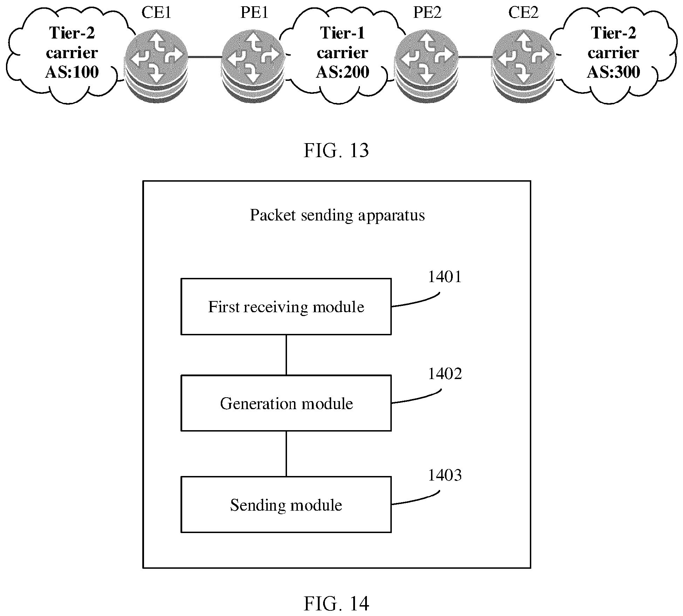

It should be noted that FIG. 2, FIG. 3, FIG. 11, and FIG. 12 are merely an example of a CSC system. In embodiments of the present invention, neither the CSC system nor whether a VPN is used within a tier-2 carrier is limited. For example, the methods provided in embodiments of the present invention can also be applied to a CSC system shown in FIG. 13. In addition, the SRv6 header in embodiments of the present invention includes not only an IPv6 header but also an extension header. For example, a packet format of an SRv6 packet may be shown in FIG. 5. Furthermore, decapsulation in embodiments of the present invention means stripping-off.

The foregoing describes the packet sending methods provided in embodiments of this application. Corresponding to the foregoing methods, embodiments of this application further provide packet sending apparatuses. FIG. 14 is a schematic diagram of a structure of a packet sending apparatus according to an embodiment of this application. The apparatus is used in a first edge network device. The first edge network device is the first edge network device shown in any one of the foregoing accompanying drawings FIG. 4 to FIG. 13. Based on the following plurality of modules shown in FIG. 14, the packet sending apparatus shown in FIG. 14 can perform all or some of operations performed by the first edge network device. It should be understood that the apparatus may include more additional modules than the shown modules, or some of the shown modules are omitted. This is not limited in this embodiment of this application. As shown in FIG. 14, the apparatus includes:
a first receiving module 1401, configured to receive a first packet including a target segment identifier;
a generation module 1402, configured to generate, based on the first packet, a second packet including a first label, where there is a mapping relationship between the first label and the target segment identifier; and
a sending module 1403, configured to send the second packet.

In a possible implementation, the target segment identifier is a first segment identifier, and the first segment identifier is used to indicate to decapsulate a header and encapsulate a label; and
the generation module 1402 is configured to: decapsulate an SRv6 header in the first packet based on the first segment identifier, and encapsulate the first label into the decapsulated packet based on a mapping relationship between the first segment identifier and the first label, to obtain the second packet including the first label.

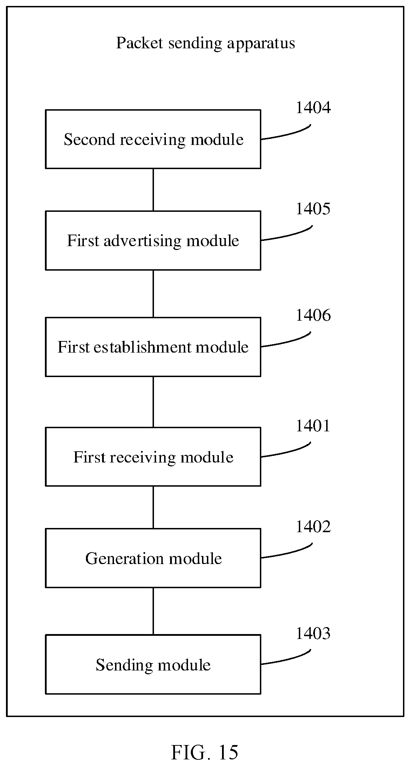

In a possible implementation, as shown in FIG. 15, the apparatus further includes:
a second receiving module 1404, configured to receive a first route and the first label corresponding to the first route;
a first advertising module 1405, configured to advertise, based on the first route, a second route carrying the first segment identifier; and
a first establishment module 1406, configured to establish the mapping relationship between the first label and the first segment identifier.

In a possible implementation, the apparatus further includes a first storage module, configured to store the mapping relationship between the first label and the first segment identifier.

In a possible implementation, the target segment identifier is a second segment identifier, the first packet further includes a first flag, the second segment identifier is used to indicate to decapsulate a header, and the first flag is used to indicate to encapsulate a label; and
the generation module 1402 is configured to: decapsulate an SRv6 header in the first packet based on the second segment identifier, and encapsulate the first label into the decapsulated packet based on an indication of the first flag and a mapping relationship between the second segment identifier and the first label, to obtain the second packet including the first label.

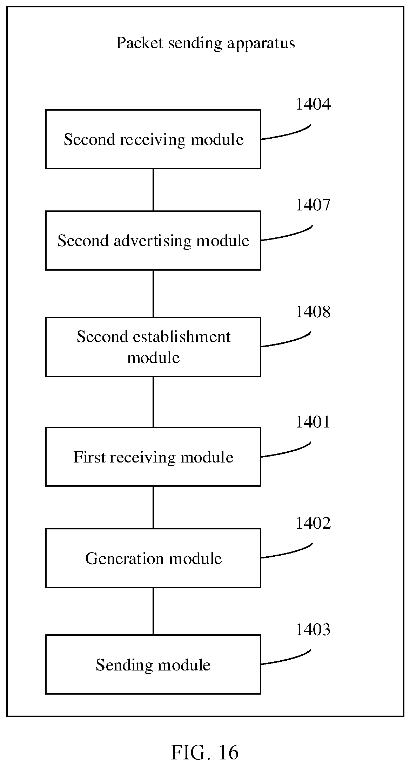

In a possible implementation, as shown in FIG. 16, the apparatus further includes:
a second receiving module 1404, configured to receive a first route and the first label corresponding to the first route;
a second advertising module 1407, configured to advertise, based on the first route, a third route carrying the second segment identifier; and
a second establishment module 1408, configured to establish the mapping relationship between the first label and the second segment identifier.

In a possible implementation, the apparatus further includes a second storage module, configured to store the mapping relationship between the first label and the second segment identifier.

In a possible implementation, the first label is an MPLS label.

In a possible implementation, the first edge network device is an egress PE device in a first network in a CSC system, the CSC system further includes a second network, the first network is an SRv6 network, the second network accesses the first network in an MPLS manner, the first network is a network of a tier-1 carrier, and the second network is a network of a tier-2 carrier.

In a possible implementation, the first receiving module 1401 is configured to receive the first packet that includes the target segment identifier and that is sent by an ingress PE device in the first network; and
the sending module 1403 is configured to send the second packet to a CE device in the second network, where
the first packet is a data packet, and the second packet is a data packet.

In a possible implementation, the second receiving module 1404 is configured to receive the first route and the first label corresponding to the first route that are sent by the customer edge CE device in the second network.

In a possible implementation, the first advertising module 1405 is configured to advertise the second route carrying the first segment identifier to the ingress PE device in the first network.

In a possible implementation, the second advertising module 1407 is configured to advertise the third route carrying the second segment route to the ingress PE device in the first network.

In a possible implementation, the first network and the second network are located in different autonomous systems.

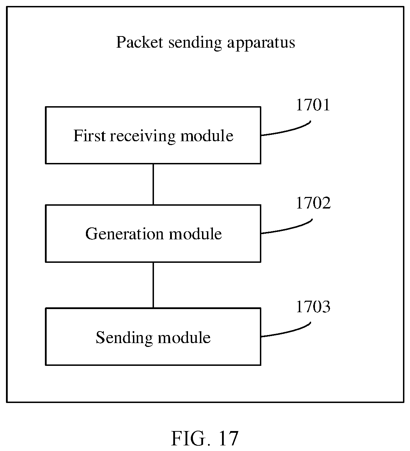

FIG. 17 is a schematic diagram of a structure of a packet sending apparatus according to an embodiment of this application. The apparatus is used in a second edge network device. The second edge network device is the second edge network device shown in any one of the foregoing accompanying drawings FIG. 4 to FIG. 13. Based on the following plurality of modules shown in FIG. 17, the packet sending apparatus shown in FIG. 17 can perform all or some of operations performed by the second edge network device. It should be understood that the apparatus may include more additional modules than the shown modules, or some of the shown modules are omitted. This is not limited in this embodiment of this application. As shown in FIG. 17, the apparatus includes:
a first receiving module 1701, configured to receive a third packet including a second label;
a generation module 1702, configured to generate, based on the third packet, a first packet including a target segment identifier, where there is a mapping relationship between the second label and the target segment identifier; and
a sending module 1703, configured to send the first packet.

In a possible implementation, the target segment identifier includes a first segment identifier, and the first segment identifier is used to indicate to decapsulate a header and encapsulate a label; and
the generation module 1702 is configured to generate, based on a mapping relationship between the second label and the first segment identifier, the first packet including the first segment identifier.

In a possible implementation, the generation module 1702 is configured to: decapsulate the second label in the third packet based on the mapping relationship between the second label and the first segment identifier, and encapsulate an internet protocol version 6 IPv6 header into the decapsulated packet, where the IPv6 header includes the first segment identifier.

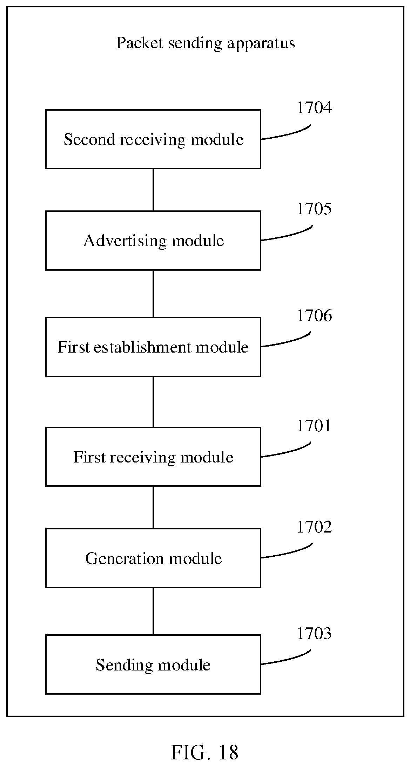

In a possible implementation, with reference to FIG. 18, the apparatus further includes:
a second receiving module 1704, configured to receive a second route carrying the first segment identifier;
an advertising module 1705, configured to advertise a fourth route and the second label corresponding to the fourth route; and
a first establishment module 1706, configured to establish the mapping relationship between the second label and the first segment identifier.

In a possible implementation, the apparatus further includes a first storage module, configured to store the mapping relationship between the second label and the first segment identifier.

In a possible implementation, the target segment identifier includes a second segment identifier, and the second segment identifier is used to indicate to decapsulate a header; and
the generation module 1702 is configured to generate, based on a mapping relationship between the second label and the second segment identifier, the first packet including the second segment identifier, where the first packet further includes a first flag, and the first flag is used to indicate to encapsulate a label.

In a possible implementation, the generation module 1702 is configured to: decapsulate the second label in the third packet based on the mapping relationship between the second segment identifier and the second label, and encapsulate an SRv6 header into the decapsulated packet, where the SRv6 header includes the second segment identifier and the first flag.

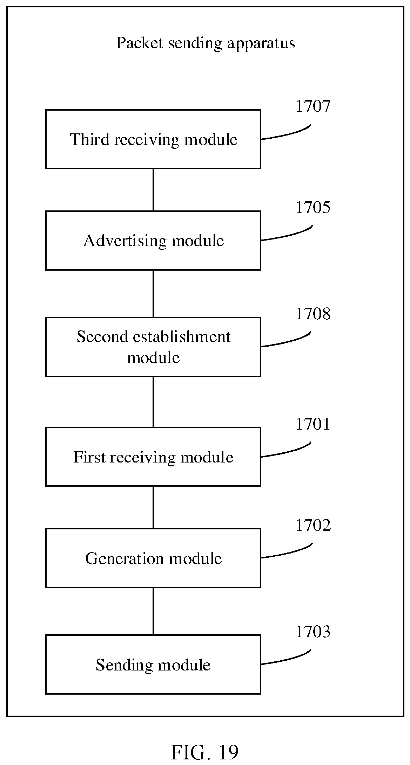

In a possible implementation, with reference to FIG. 19, the apparatus further includes:
a third receiving module 1707, configured to receive a third route carrying the second segment identifier;
an advertising module 1705, configured to advertise a fourth route and the second label corresponding to the fourth route; and
a second establishment module 1708, configured to establish the mapping relationship between the second label and the second segment identifier.

In a possible implementation, the apparatus further includes a second storage module, configured to store the mapping relationship between the second label and the second segment identifier.

In a possible implementation, the second label is an MPLS label.

In a possible implementation, the first flag is located in a flag field in a segment routing header SRH in the first packet.

In a possible implementation, the second edge network device is an ingress PE device in a first network in a CSC system, the CSC system further includes a third network, the first network is an SRv6 network, the third network accesses the first network in an MPLS manner, the first network is a network of a tier-1 carrier, and the third network is a network of a tier-2 carrier.

In a possible implementation, the first receiving module 1701 is configured to receive the third packet that includes the second label and that is sent by a customer edge CE device in the third network; and
the sending module 1703 is configured to send the first packet to an egress PE device in the first network, where
the third packet is a data packet, and the first packet is a data packet.

In a possible implementation, the second receiving module 1704 is configured to receive the second route that carries the first segment identifier and that is sent by the egress PE device in the first network.

In a possible implementation, the third receiving module 1707 is configured to receive the third route that carries the second segment identifier and that is sent by the egress PE device in the first network.

In a possible implementation, the advertising module 1705 is configured to advertise the fourth route and the second label corresponding to the fourth route to the CE device in the third network.

In a possible implementation, the apparatus further includes an allocation module, configured to allocate the second label to the fourth route.

In a possible implementation, the first network and the third network are located in different autonomous systems.

It should be understood that when the apparatuses provided in FIG. 14 to FIG. 19 above implement their functions, only division of the foregoing functional modules is used as an example for description. In actual application, the functions may be allocated, depending on a requirement, to different functional modules to perform. That is, an internal structure of a device is divided into different functional modules, to perform all or some of the functions described above. In addition, the apparatuses provided in the foregoing embodiments pertain to a same concept as the method embodiments. For specific implementation processes of the apparatuses, refer to the method embodiments. Details are not described herein again.

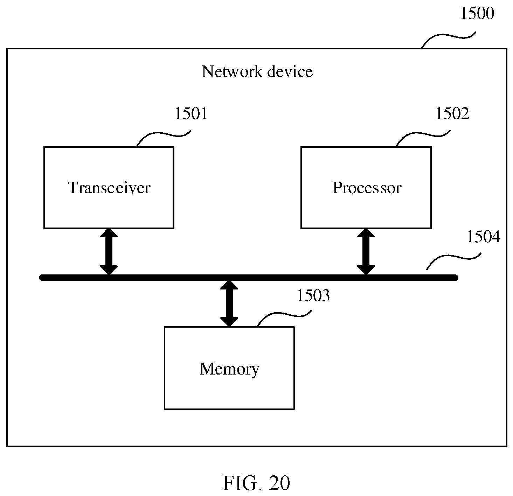

For a specific hardware structure of the PE device in the foregoing embodiments, refer to a network device 1500 shown in FIG. 20. The network device 1500 includes a transceiver 1501, a processor 1502, and a memory 1503. The transceiver 1501, the processor 1502, and the memory 1503 are connected to each other by using a bus 1504. The transceiver 1501 is configured to receive and send packets. The memory 1503 is configured to store instructions or program code. The processor 1502 is configured to invoke the instructions or program code in the memory 1503, to enable the PE device to perform relevant processing steps performed by the PE devices (such as the PE1 and the PE2) in the foregoing method embodiments. In a specific embodiment, the network device 1500 in this embodiment of this application may correspond to the first edge network device in each of the foregoing method embodiments. The processor 1502 in the network device 1500 reads the instructions or program code in the memory 1503, to enable the network device 1500 shown in FIG. 20 to perform all or some of operations performed by the first edge network device.

In a specific embodiment, the network device 1500 in this embodiment of this application may correspond to the second edge network device in each of the foregoing method embodiments. The processor 1502 in the network device 1500 reads the instructions or program code in the memory 1503, to enable the network device 1500 shown in FIG. 20 to perform all or some of operations performed by the second edge network device.

The network device 1500 may further correspond to the apparatuses shown in FIG. 14 to FIG. 19 above. For example, the first receiving module 1401, the second receiving module 1404, the first advertising module 1405, the second advertising module 1407, and the sending module 1403 in FIG. 14 to FIG. 16 are equivalent to the transceiver 1501, and the generation module 1402, the first establishment module 1406, and the second establishment module 1409 in FIG. 14 to FIG. 16 are equivalent to the processor 1502. For another example, the first receiving module 1701, the sending module 1703, the second receiving module 1704, the advertising module 1705, and the third receiving module 1707 in FIG. 17 to FIG. 19 are equivalent to the transceiver 1501, and the generation module 1702, the first establishment module 1706, and the second establishment module 1708 in FIG. 17 to FIG. 19 are equivalent to the processor 1502.

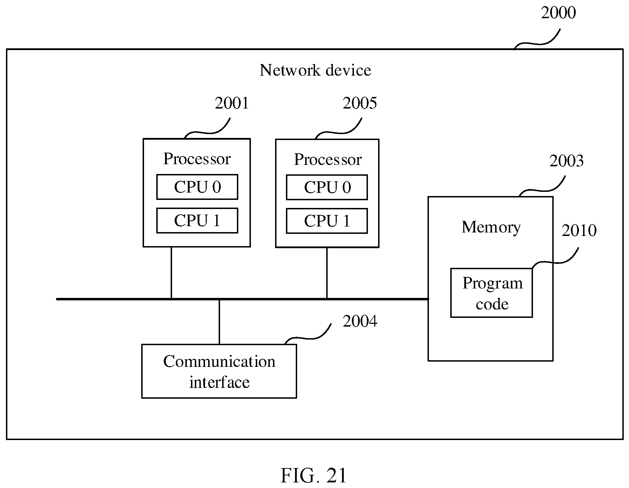

FIG. 21 is a schematic diagram of a structure of a network device 2000 according to an example embodiment of this application. The network device 2000 shown in FIG. 21 is configured to perform operations in the packet sending methods shown in FIG. 4 and FIG. 6 to FIG. 13 above. The network device 2000 is, for example, a switch or a router.

As shown in FIG. 21, the network device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), neural-network processing units (neural-network processing units, NPU), a data processing unit (Data Processing Unit, DPU), a microprocessor, or one or more integrated circuits configured to implement the solution in this application. For example, the processor 2001 includes an application-specific integrated circuit (application-specific integrated circuit, ASIC), a programmable logic device (programmable logic device, PLD) or another programmable logic device, a transistor logic device, a hardware component, or any combination thereof. The PLD may be a complex programmable logic device (complex programmable logic device, CPLD), a field programmable logic gate array (field programmable gate array, FPGA), a generic array logic (generic array logic, GAL), or any combination thereof. The processor may implement or execute various example logical blocks, modules, and circuits described with reference to content disclosed in embodiments of the present invention. Alternatively, the processor may be a combination of processors implementing a computing function, for example, a combination of one or more microprocessors, or a combination of a DSP and a microprocessor.

Optionally, the network device 2000 further includes a bus. The bus is configured to transport information between components of the network device 2000. The bus may be a peripheral component interconnect (peripheral component interconnect, PCI for short) bus, an extended industry standard architecture (extended industry standard architecture, EISA for short) bus, or the like. The bus may include an address bus, a data bus, a control bus, and the like. For ease of representation, only one bold line is used for representation in FIG. 21, but this does not mean that there is only one bus or only one type of bus. In addition to being connected by using the bus, the components of the network device 2000 in FIG. 21 may be connected in another manner. A manner in which the components are connected is not limited in this embodiment of the present invention.

For example, the memory 2003 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer. However, the memory 2003 is not limited thereto. The memory 2003, for example, exists independently and is connected to the processor 2001 by using the bus. Alternatively, the memory 2003 may be integrated with the processor 2001.

The communication interface 2004 uses any apparatus such as a transceiver, and is configured to communicate with another device or communication network. The communication network may be an ethernet, a radio access network (RAN), a wireless local area network (wireless local area networks, WLAN), or the like. The communication interface 2004 may include a wired communication interface or a wireless communication interface. Specifically, the communication interface 2004 may be an ethernet (Ethernet) interface, a fast ethernet (Fast Ethernet, FE) interface, a gigabit ethernet (Gigabit Ethernet, GE) interface, an asynchronous transfer mode (Asynchronous Transfer Mode, ATM) interface, a wireless local area network (wireless local area networks, WLAN) interface, a cellular network communication interface, or a combination thereof. The ethernet interface may be an optical interface, an electrical interface, or a combination thereof. In this embodiment of this application, the communication interface 2004 may be configured for the network device 2000 communicating with another device.

During specific implementation, in an embodiment, the processor 2001 may include one or more CPUs such as a CPU 0 and a CPU 1 in FIG. 21. Each of the processors may be a single-core (single-CPU) processor or a multi-core (multi-CPU) processor. Herein, the processor may be one or more devices, circuits, and/or processing cores configured to process data (for example, computer program instructions).

In specific implementation, in an embodiment, the network device 2000 may include a plurality of processors, for example, the processor 2001 and a processor 2005 shown in FIG. 21. Each of these processors may be a single-core (single-CPU) processor or a multi-core (multi-CPU) processor. The processor herein may be one or more devices, circuits, and/or processing cores configured to process data (for example, computer program instructions).

In specific implementation, in an embodiment, the network device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 2001, and may receive a user input in a plurality of manners. For example, the input device may be a mouse, a keyboard, a touchscreen device, or a sensor device.

In some embodiments, the memory 2003 is configured to store program code 2010 that executes the solution in this application. The processor 2001 may execute the program code 2010 stored in the memory 2003. In other words, the network device 2000 may implement, by using the processor 2001 and the program code 2010 in the memory 2003, the packet processing methods provided in the method embodiments. The program code 2010 may include one or more software modules. Optionally, the processor 2001 may also store program code or instructions that execute the solution in this application.

In a specific embodiment, the network device 2000 in this embodiment of this application may correspond to the first edge network device in each of the foregoing method embodiments. The processor 2001 in the network device 2000 reads the program code 2010 in the memory 2003 or reads the program code or instructions that are stored in the processor 2001, to enable the network device 2000 shown in FIG. 21 to perform all or some of operations performed by the first edge network device.

In a specific embodiment, the network device 2000 in this embodiment of this application may correspond to the second edge network device in each of the foregoing method embodiments. The processor 2001 in the network device 2000 reads the program code 2010 in the memory 2003 or reads the program code or instructions that are stored in the processor 2001, to enable the network device 2000 shown in FIG. 21 to perform all or some of operations performed by the second edge network device.

The network device 2000 may further correspond to the apparatuses shown in FIG. 14 to FIG. 19 above. Each functional module in the apparatuses shown in FIG. 14 to FIG. 19 is implemented by using software of the network device 2000. In other words, the functional modules included in the apparatuses shown in FIG. 14 to FIG. 19 are generated after the processor 2001 in the network device 2000 reads the program code 2010 stored in the memory 2003. For example, the first receiving module 1401, the second receiving module 1404, the first advertising module 1405, the second advertising module 1407, and the sending module 1403 in FIG. 14 to FIG. 16 are equivalent to the communication interface 2004, and the generation module 1402, the first establishment module 1406, and the second establishment module 1409 in FIG. 14 to FIG. 16 are equivalent to the processor 2001 and/or the processor 2005. For another example, the first receiving module 1701, the sending module 1703, the second receiving module 1704, the advertising module 1705, and the third receiving module 1707 in FIG. 17 to FIG. 19 are equivalent to the communication interface 2004, and the generation module 1702, the first establishment module 1706, and the second establishment module 1708 in FIG. 17 to FIG. 19 are equivalent to the processor 2001 and/or the processor 2005.

The steps of the packet sending methods shown in FIG. 4 and FIG. 6 to FIG. 12 are completed by using an integrated logic circuit in a form of hardware or instructions in a form of software in the processor in the network device 2000. The steps of the method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory. The processor performs the steps of the foregoing methods by reading information in the memory and with reference to hardware of the processor. To avoid repetition, details are not described herein again.

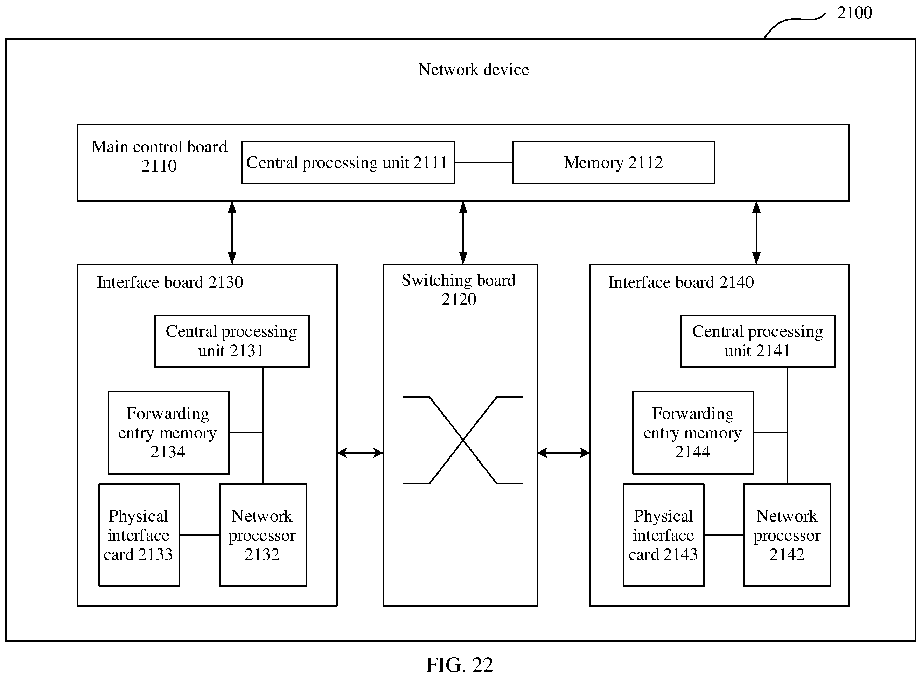

FIG. 22 is a schematic diagram of a structure of a network device 2100 according to another example embodiment of this application. The network device 2100 shown in FIG. 22 is configured to perform all or some of operations in the packet sending methods shown in FIG. 4 and FIG. 6 to FIG. 12 above. The network device 2100 is, for example, a switch or a router. The network device 2100 may be implemented by a generic bus architecture.

As shown in FIG. 22, the network device 2100 includes a main control board 2110 and an interface board 2130.

The main control board is also referred to as a main processing unit (main processing unit, MPU) or a route processor card (route processor card). The main control board 2110 is configured to control and manage components in the network device 2100, including functions of route calculation, device management, device maintenance, and protocol processing. The main control board 2110 includes a central processing unit 2111 and a memory 2112.

The interface board 2130 is also referred to as a line interface unit card (line processing unit, LPU), a line card (line card), or a service board. The interface board 2130 is configured to provide various service interfaces and forward data packets. The service interfaces include but are not limited to an ethernet interface and a POS (Packet over SONET/SDH) interface. The ethernet interface is, for example, a flexible ethernet clients (Flexible Ethernet Clients, FlexE Clients) interface. The interface board 2130 includes a central processing unit 2131, a network processor 2132, a forwarding entry memory 2134, and a physical interface card (physical interface card, PIC) 2133.

The central processing unit 2131 on the interface board 2130 is configured to control and manage the interface board 2130 and communicate with the central processing unit 2111 on the main control board 2110.

The network processor 2132 is configured to implement packet sending processing. A form of the network processor 2132 may be a forwarding chip. The forwarding chip may be a network processor (network processor, NP). In some embodiments, the forwarding chip may be implemented by an application-specific integrated circuit (application-specific integrated circuit, ASIC) or a field programmable gate array (field programmable gate array, FPGA). Specifically, the network processor 2132 is configured to forward a received packet based on a forwarding table stored in the forwarding entry memory 2134. If a destination address of the packet is an address of the network device 2100, the network processor 2132 sends the packet to a CPU (for example, the central processing unit 2131) for processing. If a destination address of the packet is not an address of the network device 2100, the network processor 2132 finds, from the forwarding table based on the destination address, a next hop and an egress interface that correspond to the destination address, and forwards the packet to the egress interface corresponding to the destination address. Processing of an uplink packet may include processing the packet at an ingress interface and searching the forwarding table. Processing of a downlink packet may include searching the forwarding table and the like. In some embodiments, the central processing unit may also perform a function of the forwarding chip, for example, implementing software forwarding based on a general-purpose CPU. In this case, the forwarding chip is not required in the interface board.

The physical interface card 2133 is configured to implement an interconnection function at a physical layer. Original traffic enters the interface board 2130 from the physical interface card 2133, and a processed packet is sent out from the physical interface card 2133. The physical interface card 2133, also referred to as a subboard, may be installed on the interface board 2130, and is responsible for converting a photoelectric signal into a packet, performing validity check on the packet, and then forwarding the packet to the network processor 2132 for processing. In some embodiments, the central processing unit 2131 may also perform a function of the network processor 2132, for example, implementing software forwarding based on a general-purpose CPU. In this case, the network processor 2132 is not required in the physical interface card 2133.

Optionally, the network device 2100 includes a plurality of interface boards. For example, the network device 2100 further includes an interface board 2140. The interface board 2140 includes a central processing unit 2141, a network processor 2142, a forwarding entry memory 2144, and a physical interface card 2143. Functions and implementations of the components in the interface board 2140 are the same as or similar to those of the components in the interface board 2130. Therefore, details are not described herein again.

Optionally, the network device 2100 further includes a switch fabric board 2120. The switch fabric board 2120 may also be referred to as a switch fabric unit (switch fabric unit, SFU). When the network device has a plurality of interface boards, the switch fabric board 2120 is configured to perform data exchange between the interface boards. For example, the interface board 2130 and the interface board 2140 may communicate by using the switch fabric board 2120.

The main control board 2110 is coupled to the interface board. For example, the main control board 2110, the interface board 2130, the interface board 2140, and the switch fabric board 2120 are connected to a system backplane by using a system bus to implement interworking. In a possible implementation, the main control board 2110 and the interface boards 2130 and 2140 establish inter-process communication protocol (inter-process communication, IPC) channels and communicate with each other by using the IPC channels.

Logically, the network device 2100 includes a control plane and a forwarding plane. The control plane includes the main control board 2110 and the central processing unit 2111. The forwarding plane includes components that perform forwarding, such as the forwarding entry memory 2134, the physical interface card 2133, and the network processor 2132. The control plane performs functions such as calculating a route, generating a forwarding table, processing signaling and protocol packets, and configuring and maintaining a status of the network device. The control plane delivers the generated forwarding table to the forwarding plane. On the forwarding plane, the network processor 2132 performs, based on the forwarding table delivered by the control plane, table searching and forwarding for a packet received by the physical interface card 2133. The forwarding table delivered by the control plane may be stored in the forwarding entry memory 2134. In some embodiments, the control plane and the forwarding plane may be completely separated and are not in a same network device.

It should be noted that there may be one or more main control boards, and when there are a plurality of main control boards, a primary main control board and a secondary main control board may be included. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, a network device may not need a switch fabric board, and an interface board performs a function of processing service data of an entire system. In a distributed forwarding architecture, a network device may have at least one switch fabric board, and implements data exchange between a plurality of interface boards by using the switch fabric board, providing large-capacity data exchange and processing capabilities. Therefore, the network device in the distributed architecture has stronger data access and processing capabilities than the network device in the centralized architecture. Optionally, the form of the network device may alternatively be a single board. That is, there is no switch fabric board, and functions of the interface board and the main control board are integrated into the board. In this case, the central processing unit on the interface board and the central processing unit on the main control board may be combined into one central processing unit on the board. The one central processing unit on the board performs functions of the two central processing units existing after the two central processing units are combined. The network device in this form has low data exchange and processing capabilities (for example, a network device such as a low-end switch or router). A specific architecture that is to be used depends on a specific networking deployment scenario. This is not limited herein.

In a specific embodiment, the network device 2100 corresponds to the packet sending apparatus that is used in a first edge network device and that is shown in any one of FIG. 14 to FIG. 16. In some embodiments, the first receiving module 1401, the first advertising module 1405, and the second advertising module 1407 in the packet sending apparatus shown in FIG. 14 to FIG. 16 are equivalent to the physical interface card 2133 in the network device 2100. The second receiving module 1404 and the sending module 1403 in the packet sending apparatus shown in FIG. 14 to FIG. 16 are equivalent to the physical interface card 2143 in the network device 2100. The generation module 1402, the first establishment module 1406, and the second establishment module 1409 in the packet sending apparatus shown in FIG. 14 to FIG. 16 are equivalent to at least one of the central processing unit 2111, the network processor 2132, and the network processor 2142 in the network device 2100.

In some embodiments, the network device 2100 alternatively corresponds to the packet sending apparatus that is used in a second edge network device and that is shown in any one of FIG. 17 to FIG. 19. In some embodiments, the first receiving module 1701 and the advertising module 1705 in the packet sending apparatus shown in FIG. 17 to FIG. 19 are equivalent to the physical interface card 2133 in the network device 2100. The sending module 1703, the second receiving module 1704, and the third receiving module 1707 in the packet sending apparatus shown in FIG. 17 to FIG. 19 are equivalent to the physical interface card 2143 in the network device 2100. The generation module 1702, the first establishment module 1706, and the second establishment module 1708 in the packet sending apparatus shown in FIG. 17 to FIG. 19 are equivalent to at least one of the central processing unit 2111, the network processor 2132, and the network processor 2142 in the network device 2100. The at least one of the central processing unit 2111, the network processor 2132, and the network processor 2142 is any one of the central processing unit 2111, the network processor 2132, and the network processor 2142, or is any combination thereof.

Based on the network devices shown in FIG. 20, FIG. 21, and FIG. 22 above, an embodiment of this application further provides a communication system. The communication system includes a first edge network device and a second edge network device. Optionally, the first edge network device is the network device 1500 shown in FIG. 20, the network device 2000 shown in FIG. 21, or the network device 2100 shown in FIG. 22, and the second edge network device is the network device 1500 shown in FIG. 20, the network device 2000 shown in FIG. 21, or the network device 2100 shown in FIG. 22.

For methods performed by the first edge network device and the second edge network device, refer to relevant descriptions of the embodiments shown in FIG. 4 and FIG. 6 to FIG. 12 above. Details are not described herein again.

It should be understood that, the processor may be a central processing unit (Central Processing Unit, CPU), or may be another general-purpose processor, a digital signal processor (digital signal processor, DSP), an application-specific integrated circuit (application specific integrated circuit, ASIC), a field programmable gate array (field-programmable gate array, FPGA), or another programmable logic device, discrete gate or transistor logic device, discrete hardware component, or the like. The general-purpose processor may be a microprocessor, or may be any conventional processor or the like. It should be noted that the processor may be a processor supporting an advanced reduced instruction set machine (advanced RISC machines, ARM) architecture.

Further, in an optional embodiment, the memory may include a read-only memory and a random access memory, and provides instructions and data to the processor. The memory may further include a nonvolatile random access memory. For example, the memory may further store information about a device type.

The memory may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. In an example description but not a restrictive description, RAMs in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM) and a direct rambus random access memory (direct rambus RAM, DR RAM).

A computer-readable storage medium is further provided. The storage medium stores at least one program instruction or code. The program instruction or code is loaded and executed by a processor, to enable a computer to implement the packet sending method according to any one of FIG. 4 and FIG. 6 to FIG. 12 above.

This application provides a computer program. When the computer program is executed by a computer, a processor or the computer is enabled to perform corresponding steps and/or procedures in the foregoing method embodiments.

A chip is provided, including a processor. The chip is configured to invoke, from a memory, and run instructions stored in the memory, so that a communication device with the chip installed performs the methods in the foregoing aspects.

Another chip is provided, including an input interface, an output interface, a processor, and a memory. The input interface, the output interface, the processor, and the memory are connected to each other by using an internal connection channel. The processor is configured to execute code in the memory. When the code is executed, the processor is configured to perform the methods in the foregoing aspects.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, all or some of the procedures or functions in this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

In the foregoing specific implementations, the objectives, technical solutions, and beneficial effects of this application are further described in detail. It should be understood that the foregoing descriptions are merely specific implementations of this application, but are not intended to limit the protection scope of this application as defined by the appended claims.

A person of ordinary skill in the art may be aware that the method steps and modules described with reference to the embodiments disclosed in this specification can be implemented by software, hardware, firmware, or any combination thereof. To clearly describe interchangeability between hardware and software, the steps and compositions of the embodiments have been generally described in the foregoing description according to functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, or an optical disc.

When software is used to implement embodiments, all or a part of embodiments may be implemented in a form of a computer program product. The computer program product includes one or more computer instructions. As an example, the methods in embodiments of this application may be described in the context of machine-executable instructions. The machine-executable instructions are included in, for example, a program module executed in a device on a real or virtual processor of a target. Generally, the program module includes a routine, a program, a library, an object, a class, a component, a data structure, or the like. The program module performs a specific task or implements a specific abstract data structure. In the embodiments, functions of the program modules may be combined or divided between the described program modules. Machine-executable instructions used for a program module may be executed locally or in a distributed device. In the distributed device, the program module may be located locally and in a remote storage medium.

Computer program code used for implementing the methods in embodiments of this application may be written in one or more programming languages. The computer program code may be provided to a processor of a general-purpose computer, a dedicated computer, or another programmable data processing apparatus, so that when being executed by the computer or the another programmable data processing apparatus, the program code causes a function/operation specified in a flowchart and/or a block diagram to be implemented. The program code may be executed completely on a computer, partially on a computer, as an independent software package, partially on a computer and partially on a remote computer, or completely on a remote computer or server.

In the context of embodiments of this application, the computer program code or relevant data may be carried by any appropriate carrier, so that a device, an apparatus, or a processor can perform the various processing and operations described above. An example of the carrier includes a signal, a computer-readable medium, and the like.

An example of the signal may include a propagating signal in an electrical, optical, radio, sound, or another form, for example, a carrier or an infrared signal.

A machine-readable medium may be any tangible medium including or storing a program that is used for or is about an instruction execution system, an apparatus, or a device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more conducting wires, a portable computer disk, a hard disk, a random access memory (RAM), a read-only memory (ROM), an erasable programmable read-only memory (EPROM or a flash memory), an optical storage device, a magnetic storage device, or any appropriate combination thereof.

It may be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described apparatus embodiments are merely examples. For example, division into the modules is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some ports. The indirect couplings or communication connections between the devices or units may be implemented in electronic, mechanical, or other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the objectives of the solutions of embodiments.

In addition, functional modules in this application may be integrated into one processing module, or each of the modules may exist alone physically, or two or more modules are integrated into one module. The integrated module may be implemented in a form of hardware, or may be implemented in a form of a software functional module.

When the integrated module is implemented in a form of a software functional module and sold or used as an independent product, the integrated module may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "n^{th}", and neither a quantity nor an execution order is limited. It should also be understood that although the terms such as first and second are used in the following description to describe various elements, these elements should not be limited by the terms. These terms are used only to distinguish one element from another. For example, without departing from the scope of the various examples, the first edge network device may be referred to as a second edge network device, and similarly, the second edge network device may be referred to as a first edge network device. The first edge network device and the second edge network device may both be edge network devices, and in some cases, may be separate and different edge network devices.

It should be further understood that sequence numbers of the foregoing processes do not mean execution sequences in embodiments of this application. The execution sequences of the processes should be determined based on functions and internal logic of the processes, and should not constitute any limitation on implementation processes of embodiments of this application.

The term "at least one" in this application means one or more, and the term "a plurality of" in this application means two or more. For example, a plurality of second packets mean two or more second packets. The terms "system" and "network" in this specification may be usually used interchangeably.

It should be understood that in this specification, the terms used in descriptions of the various examples are intended only to describe a specific example and are not intended to impose a limitation. As used in the descriptions of the various examples and in the appended claims, singular forms "one (" a" or "an")" and "the" are intended to also include a plural form, unless otherwise explicitly indicated in the context.

It should also be understood that when being used in this specification, the term "include" (also referred to as "includes", "including", "comprises", and/or "comprising") specifies presence of the described characteristic, integer, step, operation, element, and/or component, not excluding presence or addition of one or more other characteristics, integers, steps, operations, elements, components, and/or groups thereof.

It should also be understood that the term "if" may be interpreted as meaning "when ..." ("when" or "upon") or "in response to determining" or "in response to detecting". Similarly, according to the context, the phrase "if it is determined that" or "if it (a stated condition or event) is detected" may be interpreted as a meaning of "when it is determined that" or "in response to determining" or "when detecting (a stated condition or event)" or "in response to detecting (a stated condition or event)".

It should be understood that determining B based on A does not mean that B is determined based only on A. B may alternatively be determined based on A and/or other information.

It should also be understood that "an embodiment" and "a possible implementation" mentioned throughout the specification mean that a specific characteristic, structure, or feature related to the embodiment or implementation is included in at least one embodiment of this application. Therefore, "in an embodiment" and "a possible implementation" appearing throughout the specification do not necessarily indicate a same embodiment. In addition, these particular features, structures, or characteristics may be combined in one or more embodiments in any appropriate manner.

## Claims

1. A packet sending method, wherein the method comprises:
receiving (401, 1003), by a first edge network device, a first packet comprising a target segment identifier from an ingress provider edge device in a first network,
generating (402, 1004), by the first edge network device based on the first packet, a second packet comprising a first label, wherein there is a mapping relationship between the first label and the target segment identifier; and
sending (403, 1005), by the first edge network device, the second packet to a customer edge device in a second network;
wherein
the first edge network device is an egress provider edge, PE, device in the first network in a carrier's carrier, CSC, system, the CSC system further comprises the second network, the first network is an Internet Protocol version 6 segment routing, SRv6 network, the second network accesses the first network in a multiprotocol label switching, MPLS manner, the first network is a network of a tier-1 carrier, and the second network is a network of a tier-2 carrier.

2. The method according to claim 1, wherein the target segment identifier is a first segment identifier, and the first segment identifier is used to indicate to decapsulate a header and encapsulate a label; and
the generating (402, 1004), by the first edge network device based on the first packet, a second packet comprising a first label comprises:
decapsulating, by the first edge network device, an Internet Protocol version 6 segment routing, SRv6 header in the first packet based on the first segment identifier, and encapsulating the first label into the decapsulated packet based on a mapping relationship between the first segment identifier and the first label, to obtain the second packet comprising the first label.

3. The method according to claim 2, wherein before the generating (402, 1004), by the first edge network device based on the first packet, a second packet comprising a first label, the method further comprises:
receiving (701), by the first edge network device, a first route and the first label corresponding to the first route;
advertising (703), by the first edge network device based on the first route, a second route carrying the first segment identifier; and
establishing (702), by the first edge network device, the mapping relationship between the first label and the first segment identifier.

4. The method according to claim 1, wherein the target segment identifier is a second segment identifier, the first packet further comprises a first flag, the second segment identifier is used to indicate to decapsulate a header, and the first flag is used to indicate to encapsulate a label; and
the generating (402, 1004), by the first edge network device based on the first packet, a second packet comprising a first label comprises:
decapsulating, by the first edge network device, an Internet Protocol version 6 segment routing, SRv6 header in the first packet based on the second segment identifier, and encapsulating the first label into the decapsulated packet based on an indication of the first flag and a mapping relationship between the second segment identifier and the first label, to obtain the second packet comprising the first label.

5. The method according to claim 4, wherein before the generating (402, 1004), by the first edge network device based on the first packet, a second packet comprising a first label, the method further comprises:
receiving (901), by the first edge network device, a first route and the first label corresponding to the first route;
advertising (903), by the first edge network device based on the first route, a third route carrying the second segment identifier; and
establishing (902), by the first edge network device, the mapping relationship between the first label and the second segment identifier.

6. The method according to any one of claims 1 to 5, wherein the first label is a multiprotocol label switching, MPLS label.

7. A packet sending method, wherein the method comprises:
receiving (601, 1001), by a second edge network device, a third packet comprising a second label from a customer edge device in a third network,
generating (602, 1002), by the second edge network device based on the third packet, a first packet comprising a target segment identifier, wherein there is a mapping relationship between the second label and the target segment identifier; and
sending (603, 1003), by the second edge network device, the first packet to an egress edge device in a first network;
wherein
the second edge network device is an ingress provider edge, PE, device in the first network in a carrier's carrier, CSC, system, the CSC system further comprises the third network, the first network is an Internet Protocol version 6 segment routing, SRv6 network, the third network accesses the first network in a multiprotocol label switching, MPLS manner, the first network is a network of a tier-1 carrier, and the third network is a network of a tier-2 carrier.

8. The method according to claim 7, wherein the target segment identifier is a first segment identifier, and the first segment identifier is used to indicate to decapsulate a header and encapsulate a label; and
the generating (602, 1002), by the second edge network device based on the third packet, a first packet comprising a target segment identifier comprises:
generating, by the second edge network device based on a mapping relationship between the second label and the first segment identifier, the first packet comprising the first segment identifier.

9. The method according to claim 8, wherein the generating, by the second edge network device based on a mapping relationship between the second label and the first segment identifier, the first packet comprising the first segment identifier comprises:
decapsulating, by the second edge network device, the second label in the third packet based on the mapping relationship between the second label and the first segment identifier, and encapsulating an Internet Protocol version 6 segment routing, SRv6 header into the decapsulated packet, wherein the SRv6 header comprises the first segment identifier.

10. The method according to claim 8 or 9, wherein before the receiving (1001), by a second edge network device, a third packet comprising a second label, the method further comprises:
receiving, by the second edge network device, a second route carrying the first segment identifier;
advertising, by the second edge network device, a fourth route and the second label corresponding to the fourth route; and
establishing, by the second edge network device, the mapping relationship between the second label and the first segment identifier.

11. The method according to claim 9, wherein the target segment identifier is a second segment identifier, and the second segment identifier is used to indicate to decapsulate a header; and
the generating (602, 1002), by the second edge network device based on the third packet, a first packet comprising a target segment identifier comprises:
generating, by the second edge network device based on a mapping relationship between the second label and the second segment identifier, the first packet comprising the second segment identifier, wherein the first packet further comprises a first flag, and the first flag is used to indicate to encapsulate a label.

12. The method according to claim 11, wherein the generating, by the second edge network device based on a mapping relationship between the second label and the second segment identifier, the first packet comprising the second segment identifier comprises:
decapsulating, by the second edge network device, the second label in the third packet based on the mapping relationship between the second segment identifier and the second label, and encapsulating an Internet Protocol version 6 segment routing, SRv6 header into the decapsulated packet, wherein the SRv6 header comprises the second segment identifier and the first flag.

13. The method according to claim 11 or 12, wherein before the receiving (601, 1001), by a second edge network device, a third packet comprising a second label, the method further comprises:
receiving (903), by the second edge network device, a third route carrying the second segment identifier;
advertising, by the second edge network device, a fourth route and the second label corresponding to the fourth route; and
establishing (904), by the second edge network device, the mapping relationship between the second label and the second segment identifier.

14. The method according to any one of claims 7 to 13, wherein the second label is a multiprotocol label switching, MPLS label.

15. The method according to any one of claims 11 to 14, wherein the first flag is located in a flag field in a segment routing header, SRH in the first packet.

16. A packet sending apparatus, wherein the apparatus is a first edge network device configured for use in a carrier's carrier, CSC, system, and the apparatus is configured to implement the packet sending method according to any one of claims 1 to 15.

17. A packet sending system, wherein the system comprises a first edge network device configured for use in a carrier's carrier, CSC, system and a second edge network device configured for use in the CSC system, the first edge network device is configured to perform the packet sending method according to any one of claims 1 to 6, and the second edge network device is configured to perform the packet sending method according to any one of claims 7 to 15.

18. A computer-readable storage medium, wherein the storage medium stores at least one program instruction or code; and when the program instruction or the code is loaded and executed by a processor, a computer is enabled to implement the packet sending method according to any one of claims 1 to 15.

## Patentansprüche

1. Paketsendeverfahren, wobei das Verfahren Folgendes umfasst:
Empfangen (401, 1003), durch ein erstes Randnetzwerkgerät, eines ersten Pakets, das eine Zielsegmentkennung umfasst, von einem Eingangsanbieterrandgerät in einem ersten Netzwerk,
Erzeugen (402, 1004), durch das erste Randnetzwerkgerät, basierend auf dem ersten Paket, eines zweiten Pakets, das eine erste Bezeichnung umfasst, wobei eine Zuordnungsbeziehung zwischen der ersten Bezeichnung und der Zielsegmentkennung besteht; und
Senden (403, 1005), durch das erste Randnetzwerkgerät, des zweiten Pakets an ein Client-Randgerät in einem zweiten Netzwerk; wobei
das erste Randnetzwerkgerät ein Ausgangsanbieterrandgerät, Ausgangs-PE-Gerät, in dem ersten Netzwerk in einem Trägersystem eines Trägers, CSC-System, ist, wobei das CSC-System ferner das zweite Netzwerk umfasst, das erste Netzwerk ein Segment-Routing-Netzwerk mit Internet Protocol Version 6, SRv6-Netzwerk, ist, das zweite Netzwerk per Multiprotocol-Label-Switching, MPLS, auf das erste Netzwerk zugreift, das erste Netzwerk ein Netzwerk eines Trägers der Ebene 1 ist und das zweite Netzwerk ein Netzwerk eines Trägers der Ebene 2 ist.

2. Verfahren nach Anspruch 1, wobei die Zielsegmentkennung eine erste Segmentkennung ist und die erste Segmentkennung verwendet wird, um anzuzeigen, dass ein Header zu entkapseln und eine Bezeichnung einzukapseln ist; und
das Erzeugen (402, 1004), durch das erste Randnetzwerkgerät, basierend auf dem ersten Paket, eines zweiten Pakets, das eine erste Bezeichnung umfasst, Folgendes umfasst:
Entkapseln, durch das erste Randnetzwerkgerät, eines Segment-Routing-Headers mit Internet Protocol Version 6, SRv6-Headers, in dem ersten Paket basierend auf der ersten Segmentkennung und Einkapseln der ersten Bezeichnung in das entkapselte Paket basierend auf einer Zuordnungsbeziehung zwischen der ersten Segmentkennung und der ersten Bezeichnung, um das zweite Paket, das die erste Bezeichnung umfasst, zu erlangen.

3. Verfahren nach Anspruch 2, wobei das Verfahren vor dem Erzeugen (402, 1004), durch das erste Randnetzwerkgerät, basierend auf dem ersten Paket, eines zweiten Pakets, das eine erste Bezeichnung umfasst, ferner Folgendes umfasst:
Empfangen (701), durch das erste Randnetzwerkgerät, einer ersten Route und der ersten Bezeichnung, die der ersten Route entspricht;
Bekanntgeben (703), durch das erste Randnetzwerkgerät, basierend auf der ersten Route, einer zweiten Route, welche die erste Segmentkennung trägt; und
Herstellen (702), durch das erste Randnetzwerkgerät, der Zuordnungsbeziehung zwischen der ersten Bezeichnung und der ersten Segmentkennung.

4. Verfahren nach Anspruch 1, wobei die Zielsegmentkennung eine zweite Segmentkennung ist, das erste Paket ferner eine erste Markierung umfasst, die zweite Segmentkennung verwendet wird, um anzuzeigen, dass ein Header zu entkapseln ist, und die erste Markierung verwendet wird, um anzuzeigen, dass eine Bezeichnung einzukapseln ist; und
das Erzeugen (402, 1004), durch das erste Randnetzwerkgerät, basierend auf dem ersten Paket, eines zweiten Pakets, das eine erste Bezeichnung umfasst, Folgendes umfasst:
Entkapseln, durch das erste Randnetzwerkgerät, eines Segment-Routing-Headers mit Internet Protocol Version 6, SRv6-Headers, in dem ersten Paket basierend auf der zweiten Segmentkennung und Einkapseln der ersten Bezeichnung in das entkapselte Paket basierend auf einer Anzeige der ersten Markierung und einer Zuordnungsbeziehung zwischen der zweiten Segmentkennung und der ersten Bezeichnung, um das zweite Paket, das die erste Bezeichnung umfasst, zu erlangen.

5. Verfahren nach Anspruch 4, wobei das Verfahren vor dem Erzeugen (402, 1004), durch das erste Randnetzwerkgerät, basierend auf dem ersten Paket, eines zweiten Pakets, das eine erste Bezeichnung umfasst, ferner Folgendes umfasst:
Empfangen (901), durch das erste Randnetzwerkgerät, einer ersten Route und der ersten Bezeichnung, die der ersten Route entspricht;
Bekanntgeben (903), durch das erste Randnetzwerkgerät, basierend auf der ersten Route, einer dritten Route, welche die zweite Segmentkennung trägt; und
Herstellen (902), durch das erste Randnetzwerkgerät, der Zuordnungsbeziehung zwischen der ersten Bezeichnung und der zweiten Segmentkennung.

6. Verfahren nach einem der Ansprüche 1 bis 5, wobei die erste Bezeichnung eine Multiprotocol-Label-Switching-Bezeichnung, MPLS-Bezeichnung, ist.

7. Paketsendeverfahren, wobei das Verfahren Folgendes umfasst:
Empfangen (601, 1001), durch ein zweites Randnetzwerkgerät, eines dritten Pakets, das eine zweite Bezeichnung umfasst, von einem Client-Randgerät in einem dritten Netzwerk,
Erzeugen (602, 1002), durch das zweite Randnetzwerkgerät, basierend auf dem dritten Paket, eines ersten Pakets, das eine Zielsegmentkennung umfasst, wobei eine Zuordnungsbeziehung zwischen der zweiten Bezeichnung und der Zielsegmentkennung besteht; und
Senden (603, 1003), durch das zweite Randnetzwerkgerät, des ersten Pakets an ein Ausgangsrandgerät in einem ersten Netzwerk;
wobei das zweite Randnetzwerkgerät ein Eingangsanbieterrandgerät, Eingangs-PE-Gerät, in dem ersten Netzwerk in einem Trägersystem eines Trägers, CSC-System, ist, wobei das CSC-System ferner das dritte Netzwerk umfasst, das erste Netzwerk ein Segment-Routing-Netzwerk mit Internet Protocol Version 6, SRv6-Netzwerk, ist, das dritte Netzwerk per Multiprotocol-Label-Switching, MPLS, auf das erste Netzwerk zugreift, das erste Netzwerk ein Netzwerk eines Trägers der Ebene 1 ist und das dritte Netzwerk ein Netzwerk eines Trägers der Ebene 2 ist.

8. Verfahren nach Anspruch 7, wobei die Zielsegmentkennung eine erste Segmentkennung ist und die erste Segmentkennung verwendet wird, um anzuzeigen, dass ein Header zu entkapseln und eine Bezeichnung einzukapseln ist; und
das Erzeugen (602, 1002), durch das zweite Randnetzwerkgerät, basierend auf dem dritten Paket, eines ersten Pakets, das eine Zielsegmentkennung umfasst, Folgendes umfasst:
Erzeugen, durch das zweite Randnetzwerkgerät, basierend auf einer Zuordnungsbeziehung zwischen der zweiten Bezeichnung und der ersten Segmentkennung, des ersten Pakets, das die erste Segmentkennung umfasst.

9. Verfahren nach Anspruch 8, wobei das Erzeugen, durch das zweite Randnetzwerkgerät, basierend auf einer Zuordnungsbeziehung zwischen der zweiten Bezeichnung und der ersten Segmentkennung, des ersten Pakets, das die erste Segmentkennung umfasst, Folgendes umfasst:
Entkapseln, durch das zweite Randnetzwerkgerät, der zweiten Bezeichnung in dem dritten Paket basierend auf der Zuordnungsbeziehung zwischen der zweiten Bezeichnung und der ersten Segmentkennung und Einkapseln eines Segment-Routing-Headers mit Internet Protocol Version 6, SRv6-Headers, in das entkapselte Paket, wobei der SRv6-Header die erste Segmentkennung umfasst.

10. Verfahren nach Anspruch 8 oder 9, wobei das Verfahren vor dem Empfangen (1001), durch ein zweites Randnetzwerkgerät, eines dritten Pakets, das eine zweite Bezeichnung umfasst, ferner Folgendes umfasst:
Empfangen, durch das zweite Randnetzwerkgerät, einer zweiten Route, welche die erste Segmentkennung trägt;
Bekanntgeben, durch das zweite Randnetzwerkgerät, einer vierten Route und der zweiten Bezeichnung, die der vierten Route entspricht; und
Herstellen, durch das zweite Randnetzwerkgerät, der Zuordnungsbeziehung zwischen der zweiten Bezeichnung und der ersten Segmentkennung.

11. Verfahren nach Anspruch 9, wobei die Zielsegmentkennung eine zweite Segmentkennung ist und die zweite Segmentkennung verwendet wird, um anzuzeigen, dass ein Header zu entkapseln ist; und
das Erzeugen (602, 1002), durch das zweite Randnetzwerkgerät, basierend auf dem dritten Paket, eines ersten Pakets, das eine Zielsegmentkennung umfasst, Folgendes umfasst:
Erzeugen, durch das zweite Randnetzwerkgerät, basierend auf einer Zuordnungsbeziehung zwischen der zweiten Bezeichnung und der zweiten Segmentkennung, des ersten Pakets, das die zweite Segmentkennung umfasst, wobei das erste Paket ferner eine erste Markierung umfasst und die erste Markierung verwendet wird, um anzuzeigen, dass eine Bezeichnung einzukapseln ist.

12. Verfahren nach Anspruch 11, wobei das Erzeugen, durch das zweite Randnetzwerkgerät, basierend auf einer Zuordnungsbeziehung zwischen der zweiten Bezeichnung und der zweiten Segmentkennung, des ersten Pakets, das die zweite Segmentkennung umfasst, Folgendes umfasst:
Entkapseln, durch das zweite Randnetzwerkgerät, der zweiten Bezeichnung in dem dritten Paket basierend auf der Zuordnungsbeziehung zwischen der zweiten Segmentkennung und der zweiten Bezeichnung und Einkapseln eines Segment-Routing-Headers mit Internet Protocol Version 6, SRv6-Headers, in das entkapselte Paket, wobei der SRv6-Header die zweite Segmentkennung und die erste Markierung umfasst.

13. Verfahren nach Anspruch 11 oder 12, wobei das Verfahren vor dem Empfangen (601, 1001), durch ein zweites Randnetzwerkgerät, eines dritten Pakets, das eine zweite Bezeichnung umfasst, ferner Folgendes umfasst:
Empfangen (903), durch das zweites Randnetzwerkgerät, einer dritten Route, welche die zweite Segmentkennung trägt;
Bekanntgeben, durch das zweite Randnetzwerkgerät, einer vierten Route und der zweiten Bezeichnung, die der vierten Route entspricht; und
Herstellen (904), durch das zweite Randnetzwerkgerät, der Zuordnungsbeziehung zwischen der zweiten Bezeichnung und der zweiten Segmentkennung.

14. Verfahren nach einem der Ansprüche 7 bis 13, wobei die zweite Bezeichnung eine Multiprotocol-Label-Switching-Bezeichnung, MPLS-Bezeichnung, ist.

15. Verfahren nach einem der Ansprüche 11 bis 14, wobei sich die erste Markierung in einem Markierungsfeld in einem Segment-Routing-Header, SRH, in dem ersten Paket befindet.

16. Paketsendevorrichtung, wobei die Vorrichtung ein erstes Randnetzwerkgerät ist, das zur Verwendung in einem Trägersystem eines Trägers, CSC-System, konfiguriert ist, und die Vorrichtung dazu konfiguriert ist, das Paketsendeverfahren nach einem der Ansprüche 1 bis 15 zu implementieren.

17. Paketsendesystem, wobei das System ein erstes Randnetzwerkgerät, das zur Verwendung in einem Trägersystem eines Trägers, CSC-System, konfiguriert ist, und ein zweites Randnetzwerkgerät, das zur Verwendung in dem CSC-System konfiguriert ist, umfasst,
wobei das erste Randnetzwerkgerät dazu konfiguriert ist, das Paketsendeverfahren nach einem der Ansprüche 1 bis 6 durchzuführen, und das zweite Randnetzwerkgerät dazu konfiguriert ist, das Paketsendeverfahren nach einem der Ansprüche 7 bis 15 durchzuführen.

18. Computerlesbares Speichermedium, wobei das Speichermedium mindestens eine Programmanweisung oder einen Code speichert; und wenn die Programmanweisung oder der Code geladen wird und durch einen Prozessor ausgeführt wird, ein Computer in die Lage versetzt wird, das Paketsendeverfahren nach einem der Ansprüche 1 bis 15 zu implementieren.

## Revendications

1. Procédé d'envoi de paquet, dans lequel le procédé comprend :
la réception (401, 1003), par un premier dispositif de réseau périphérique, d'un premier paquet comprenant un identifiant de segment cible provenant d'un dispositif périphérique de fournisseur d'entrée dans un premier réseau,
la génération (402, 1004), par le premier dispositif de réseau périphérique sur la base du premier paquet, d'un deuxième paquet comprenant une première étiquette, dans lequel il existe une relation de mappage entre la première étiquette et l'identifiant de segment cible ; et
l'envoi (403, 1005), par le premier dispositif de réseau périphérique, du deuxième paquet à un dispositif périphérique client dans un deuxième réseau ; dans lequel
le premier dispositif de réseau périphérique est un dispositif périphérique de fournisseur de sortie, PE, dans le premier réseau dans un système de support d'un support, CSC, le système CSC comprend également le deuxième réseau, le premier réseau est un réseau de routage de segment de protocole Internet version 6, SRv6, le deuxième réseau accède au premier réseau de manière à commutation d'étiquettes multiprotocole, MPLS, le premier réseau est un réseau d'un support de niveau 1, et le deuxième réseau est un réseau d'un support de niveau 2.

2. Procédé selon la revendication 1, dans lequel l'identifiant de segment cible est un premier identifiant de segment, et le premier identifiant de segment est utilisé pour indiquer de décapsuler un en-tête et d'encapsuler une étiquette ; et
la génération (402, 1004), par le premier dispositif de réseau périphérique sur la base du premier paquet, d'un deuxième paquet comprenant une première étiquette comprend :
le décapsulage, par le premier dispositif de réseau périphérique, d'un en-tête de routage de segment de protocole Internet version 6, SRv6, dans le premier paquet sur la base du premier identifiant de segment, et l'encapsulage de la première étiquette dans le paquet décapsulé sur la base d'une relation de mappage entre le premier identifiant de segment et la première étiquette, pour obtenir le deuxième paquet comprenant la première étiquette.

3. Procédé selon la revendication 2, dans lequel, avant la génération (402, 1004), par le premier dispositif de réseau périphérique sur la base du premier paquet, d'un deuxième paquet comprenant une première étiquette, le procédé comprend également :
la réception (701), par le premier dispositif de réseau périphérique, d'un premier itinéraire et de la première étiquette correspondant au premier itinéraire ;
l'annonce (703), par le premier dispositif de réseau périphérique sur la base du premier itinéraire, d'un deuxième itinéraire transportant le premier identifiant de segment ; et
l'établissement (702), par le premier dispositif de réseau périphérique, de la relation de mappage entre la première étiquette et le premier identifiant de segment.

4. Procédé selon la revendication 1, dans lequel l'identifiant de segment cible est un second identifiant de segment, le premier paquet comprend également un premier indicateur, le second identifiant de segment est utilisé pour indiquer de décapsuler un en-tête, et le premier indicateur est utilisé pour indiquer d'encapsuler une étiquette ; et
la génération (402, 1004), par le premier dispositif de réseau périphérique sur la base du premier paquet, d'un deuxième paquet comprenant une première étiquette comprend :
le décapsulage, par le premier dispositif de réseau périphérique, d'un en-tête de routage de segment de protocole Internet version 6, SRv6, dans le premier paquet sur la base du second identifiant de segment, et l'encapsulage de la première étiquette dans le paquet décapsulé sur la base d'une indication du premier indicateur et d'une relation de mappage entre le second identifiant de segment et la première étiquette, pour obtenir le deuxième paquet comprenant la première étiquette.

5. Procédé selon la revendication 4, dans lequel, avant la génération (402, 1004), par le premier dispositif de réseau périphérique sur la base du premier paquet, d'un deuxième paquet comprenant une première étiquette, le procédé comprend également :
la réception (901), par le premier dispositif de réseau périphérique, d'un premier itinéraire et de la première étiquette correspondant au premier itinéraire ;
l'annonce (903), par le premier dispositif de réseau périphérique sur la base du premier itinéraire, d'un troisième itinéraire transportant le second identifiant de segment ; et
l'établissement (902), par le premier dispositif de réseau périphérique, de la relation de mappage entre la première étiquette et le second identifiant de segment.

6. Procédé selon l'une quelconque des revendications 1 à 5, dans lequel la première étiquette est une étiquette à commutation d'étiquettes multiprotocole, MPLS.

7. Procédé d'envoi de paquet, dans lequel le procédé comprend :
la réception (601, 1001), par un second dispositif de réseau périphérique, d'un troisième paquet comprenant une seconde étiquette provenant d'un dispositif périphérique client dans un troisième réseau,
la génération (602, 1002), par le second dispositif de réseau périphérique sur la base du troisième paquet, d'un premier paquet comprenant un identifiant de segment cible, dans lequel il existe une relation de mappage entre la seconde étiquette et l'identifiant de segment cible ; et
l'envoi (603, 1003), par le second dispositif de réseau périphérique, du premier paquet à un dispositif périphérique de sortie dans un premier réseau ; dans lequel
le second dispositif de réseau périphérique est un dispositif périphérique de fournisseur d'entrée, PE, dans le premier réseau dans un système de support d'un support, CSC, le système CSC comprend également le troisième réseau, le premier réseau est un réseau de routage de segment de protocole Internet version 6, SRv6, le troisième réseau accède au premier réseau de manière à commutation d'étiquettes multiprotocole, MPLS, le premier réseau est un réseau d'un support de niveau 1, et le troisième réseau est un réseau d'un support de niveau 2.

8. Procédé selon la revendication 7, dans lequel l'identifiant de segment cible est un premier identifiant de segment, et le premier identifiant de segment est utilisé pour indiquer de décapsuler un en-tête et d'encapsuler une étiquette ; et
la génération (602, 1002), par le second dispositif de réseau périphérique sur la base du troisième paquet, d'un premier paquet comprenant un identifiant de segment cible comprend :
la génération, par le second dispositif de réseau périphérique sur la base d'une relation de mappage entre la seconde étiquette et le premier identifiant de segment, le premier paquet comprenant le premier identifiant de segment.

9. Procédé selon la revendication 8, dans lequel la génération, par le second dispositif de réseau périphérique sur la base d'une relation de mappage entre la seconde étiquette et le premier identifiant de segment, le premier paquet comprenant le premier identifiant de segment comprend :
le décapsulage, par le second dispositif de réseau périphérique, de la seconde étiquette dans le troisième paquet sur la base de la relation de mappage entre la seconde étiquette et le premier identifiant de segment, et l'encapsulage d'un en-tête de routage de segment de protocole Internet version 6, SRv6, dans le paquet décapsulé, dans lequel l'en-tête SRv6 comprend le premier identifiant de segment.

10. Procédé selon la revendication 8 ou 9, dans lequel, avant la réception (1001), par un second dispositif de réseau périphérique, d'un troisième paquet comprenant une seconde étiquette, le procédé comprend également :
la réception, par le second dispositif de réseau périphérique, d'un deuxième itinéraire transportant le premier identifiant de segment ;
l'annonce, par le second dispositif de réseau périphérique, d'un quatrième itinéraire et de la seconde étiquette correspondant au quatrième itinéraire ; et
l'établissement, par le second dispositif de réseau périphérique, de la relation de mappage entre la seconde étiquette et le premier identifiant de segment.

11. Procédé selon la revendication 9, dans lequel l'identifiant de segment cible est un second identifiant de segment, et le second identifiant de segment est utilisé pour indiquer de décapsuler un en-tête ; et
la génération (602, 1002), par le second dispositif de réseau périphérique sur la base du troisième paquet, d'un premier paquet comprenant un identifiant de segment cible comprend :
la génération, par le second dispositif de réseau périphérique sur la base d'une relation de mappage entre la seconde étiquette et le second identifiant de segment, du premier paquet comprenant le second identifiant de segment, dans lequel le premier paquet comprend également un premier indicateur, et le premier indicateur est utilisé pour indiquer d'encapsuler une étiquette.

12. Procédé selon la revendication 11, dans lequel la génération, par le second dispositif de réseau périphérique sur la base d'une relation de mappage entre la seconde étiquette et le second identifiant de segment, le premier paquet comprenant le second identifiant de segment comprend :
le décapsulage, par le second dispositif de réseau périphérique, de la seconde étiquette dans le troisième paquet sur la base de la relation de mappage entre le second identifiant de segment et la seconde étiquette, et l'encapsulage d'un en-tête de routage de segment de protocole Internet version 6, SRv6, dans le paquet décapsulé, dans lequel l'en-tête SRv6 comprend le second identifiant de segment et le premier indicateur.

13. Procédé selon la revendication 11 ou 12, dans lequel, avant la réception (601, 1001), par un second dispositif de réseau périphérique, d'un troisième paquet comprenant une seconde étiquette, le procédé comprend également :
la réception (903), par le second dispositif de réseau périphérique, d'un troisième itinéraire transportant le second identifiant de segment ;
l'annonce, par le second dispositif de réseau périphérique, d'un quatrième itinéraire et de la seconde étiquette correspondant au quatrième itinéraire ; et
l'établissement (904), par le second dispositif de réseau périphérique, de la relation de mappage entre la seconde étiquette et le second identifiant de segment.

14. Procédé selon l'une quelconque des revendications 7 à 13, dans lequel la seconde étiquette est une étiquette à commutation d'étiquettes multiprotocole, MPLS.

15. Procédé selon l'une quelconque des revendications 11 à 14, dans lequel le premier indicateur est situé dans un champ d'indicateur dans un en-tête de routage de segment, SRH, dans le premier paquet.

16. Appareil d'envoi de paquet, dans lequel l'appareil est un premier dispositif de réseau périphérique configuré pour une utilisation dans un système de support d'un support, CSC, et l'appareil est configuré pour mettre en œuvre le procédé d'envoi de paquet selon l'une quelconque des revendications 1 à 15.

17. Système d'envoi de paquet, dans lequel le système comprend un premier dispositif de réseau périphérique configuré pour une utilisation dans un système de support d'un support, CSC et un deuxième dispositif de réseau périphérique configuré pour une utilisation dans le système CSC,
le premier dispositif de réseau périphérique est configuré pour exécuter le procédé d'envoi de paquets selon l'une quelconque des revendications 1 à 6, et le second dispositif de réseau périphérique est configuré pour exécuter le procédé d'envoi de paquet selon l'une quelconque des revendications 7 à 15.

18. Support de stockage lisible par ordinateur, dans lequel le support de stockage stocke au moins une instruction ou un code de programme ; et lorsque l'instruction ou le code de programme est chargé et exécuté par un processeur, un ordinateur est activé pour mettre en œuvre le procédé d'envoi de paquet selon l'une quelconque des revendications 1 à 15.
